(19) **Europäisches Patentamt**
**European Patent Office**
**Office européen des brevets**

(11) **EP 3 222 441 B1**

(12) **EUROPEAN PATENT SPECIFICATION**

(45) Date of publication and mention
of the grant of the patent:
**26.06.2019 Bulletin 2019/26**

(21) Application number: **15860521.2**

(22) Date of filing: **13.11.2015**

(51) Int Cl.:
***B60C 11/16*** *(2006.01)*

(86) International application number:
**PCT/JP2015/081926**

(87) International publication number:
**WO 2016/080292 (26.05.2016 Gazette 2016/21)**

(54) **STUD AND STUDDABLE TIRE**

SPIKE UND BESPIKEBARER REIFEN

CRAMPON ET PNEUMATIQUE EN MESURE D'ÊTRE CRAMPONNÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.11.2014 JP 2014236903**

(43) Date of publication of application:
**27.09.2017 Bulletin 2017/39**

(73) Proprietor: **Bridgestone Corporation
Tokyo 104-8340 (JP)**

(72) Inventors:
• **SAWADA Hiroki
Tokyo 104-8340 (JP)**
• **ITO Tomoaki
Tokyo 104-8340 (JP)**

• **WADA Junichiro
Tokyo 104-8340 (JP)**
• **KAWAMATA Satoru
Tokyo 104-8340 (JP)**

(74) Representative: **Oxley, Robin John George
Marks & Clerk LLP
15 Fetter Lane
London EC4A 1BW (GB)**

(56) References cited:
**EP-A1- 2 540 527        WO-A1-99/56976
WO-A1-2012/004452   WO-A1-2012/107305
WO-A1-2014/148262   JP-A- 2002 120 517
JP-A- 2014 180 952**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND OF THE INVENTION

1. Field of the Invention

The present invention relates to a stud for a studdable tire (hereinafter referred to simply as "stud") and a studdable tire having the studs fitted thereon.

2. Description of the Related Art

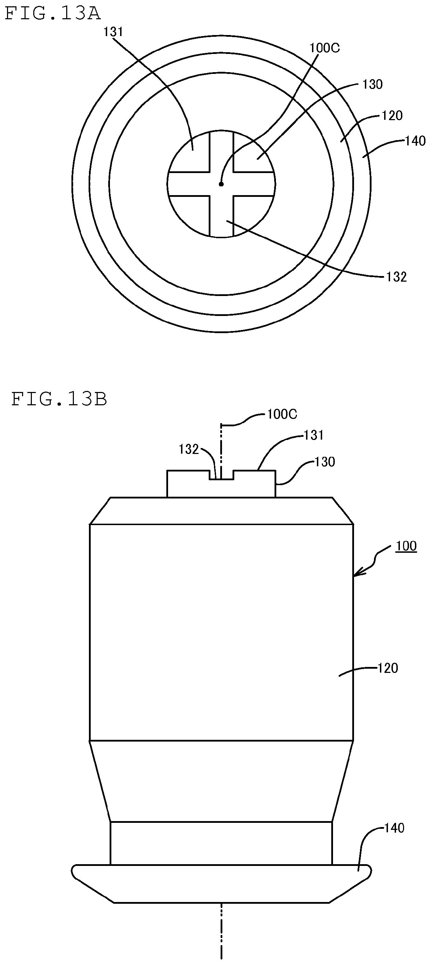

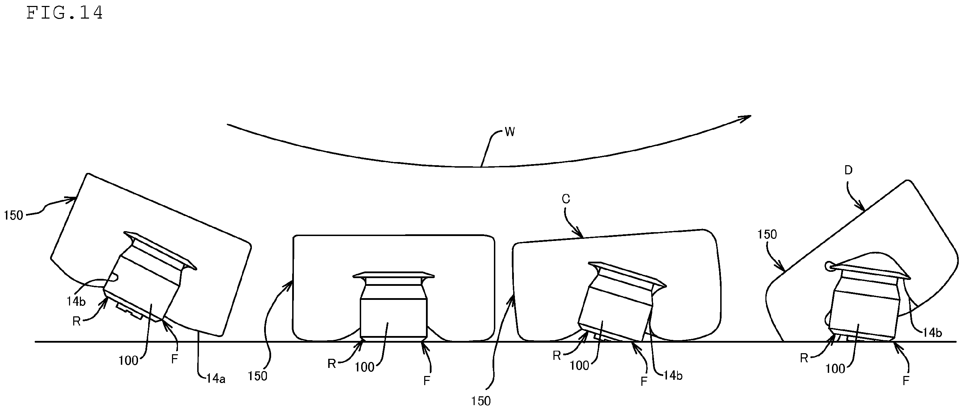

Conventionally, as shown in FIG. 13, a stud 100 is formed into a columnar body along a central axis 100C, with a body section 120, a pin section 130 disposed on one end of the body section along the central axis 100C, and a flange section 140 disposed on the other end of the body section along the central axis 100C. And the stud 100 is embedded in the tread surface of a tire with the flange section 140 first fitted into a stud recess (hole) formed in the tread surface in such a manner that the pin section 130 protrudes from the tread surface 140 (see FIG. 14). And the stud 100 known in the art has the body section 120, the pin section 130, and the flange section 140, and is formed such that the sectional shape orthogonal to the central axis 100C is circular.

Here, the central axis 100C refers to the axis of rotation center of the pin section, the body section, and the flange section of a stud embedded in the direction of tire radius (depth direction), that is, the axis of the median point in the cross section orthogonal to the tire radial direction.

That is, the stud 100 is formed in a cylindrical shape with the body section 120 and the pin section 130 extending in the direction along the central axis 100C. And formed on one end (end surface) of the pin section 130 are grooves 132 in a cross shape in planar view extending in directions orthogonal to the central axis 100C.

FIG. 14 shows how a stud 100 fitted in the stud recess formed in the tread surface of a studdable tire falls off from a worn tread surface at a sudden starting or acceleration of the vehicle. In FIG. 14, W stands for the direction of the rolling motion of the studdable tire 150, F the leading-end side where the studdable tire 150 in the rolling motion first touches the ground, and R the trailing-end side where the studdable tire 150 in the rolling motion touches the ground later.

The studdable tire 150 is required of having the durability performance of the pin section 130, the edge performance of the pin section 130 to scratch the ice on the road surface, and the anti-stud-loss performance to resist the falling out of the studs 100.

Also known is a stud 100 formed in an elliptical cylinder shape (see Patent Document 1). The stud consists of a body section, a pin section disposed on one end of the body section along the central axis of the body section, and a flange section disposed on the other end of the body section along the central axis. And the stud is embedded in the tread surface of a tire with the flange section first fitted into a stud recess formed in the tread surface in such a manner that the pin section protrudes from the tread surface.

Attention is also drawn to the disclosures of EP2540527 and WO2014/148262.

RELATED ART DOCUMENT

Patent Document

Patent Document 1: Japanese Patent No. 4088055

SUMMARY OF THE INVENTION

Problem to be Solved by the Invention

However, the stud disclosed in Patent Document 1 has an elliptically shaped peripheral edge at the end of the pin section. As a result, the stud is prone to damage to the pin section at the time of braking or acceleration due to the insufficient strength in the end portions of the major axis of the elliptical shape. Furthermore, the use of simply circular or elliptical shape has not ensured sufficient edge effect or anti-stud-loss performance.

The present invention aims to provide a stud featuring excellent braking and acceleration performance due to high edge effect, improved anti-stud-loss performance, and high durability of the pin section having strength to resist damage thereto, and a studdable tire fitted with such studs.

Means for Solving the Problem

According to the present invention, there is provided a stud as claimed in claim 1.

BRIEF DESCRIPTION OF THE DRAWINGS

FIG. 1A is a plan view of a stud (first embodiment), and FIG. 1B a front view of a stud (first embodiment).
FIG. 2 is a perspective view of a stud (first embodiment).
FIG. 3 shows how to fit a stud in a stud recess (first embodiment) .
FIG. 4 is a cross section of a studdable tire (first embodiment).
FIG. 5 is an illustration showing a tread surface of a studdable tire (first embodiment).
FIG. 6A is a plan view of a stud (third embodiment), and FIG. 6B a front view of a stud (third embodiment).
FIG. 7A is a plan view of a stud (fourth embodiment), and FIG. 7B a front view of a stud (fourth embodiment).
FIG. 8A is a plan view of a stud (fifth embodiment), and FIG. 8B a front view of a stud (fifth embodiment).
FIG. 9A is a plan view of a stud (sixth embodiment), and FIG. 9B a front view of a stud (sixth embodiment).
FIG. 10A is a plan view of a stud (seventh embodiment), and FIG. 10B a front view of a stud (seventh embodiment).
FIG. 11 is a front view of a stud (eighth embodiment).
FIG. 12 is a front view of a stud (ninth embodiment).
FIG. 13A is a plan view of a stud (conventional example), and FIG. 13B a front view of a stud (conventional example).
FIG. 14 is an illustration showing how a stud falls out from a worn block of a tire.

BEST MODE FOR CARRYING OUT THE INVENTION

First Embodiment

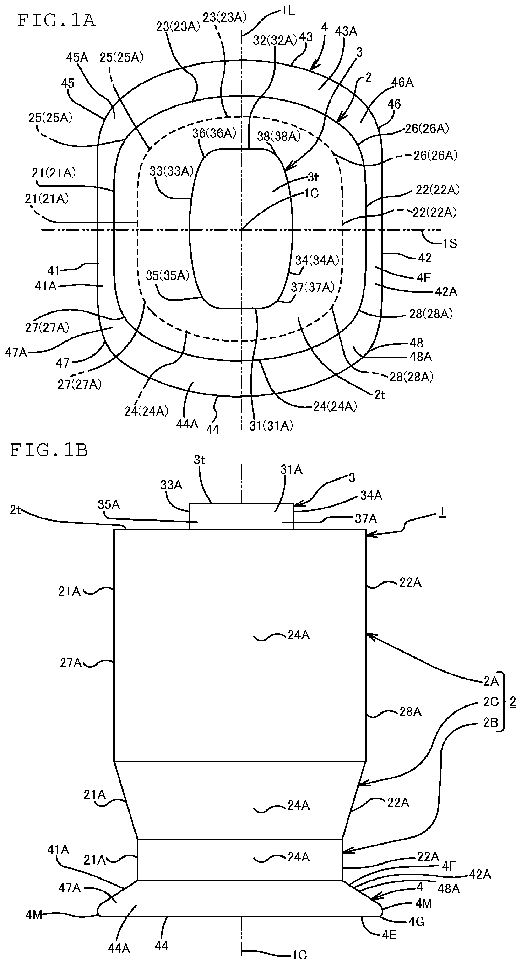

With reference to FIGS. 1 to 5, a description is given of a stud according to the first embodiment of the invention to be embedded in the tread surface of a studdable tire (studded tire) .

- Overall structure of the stud

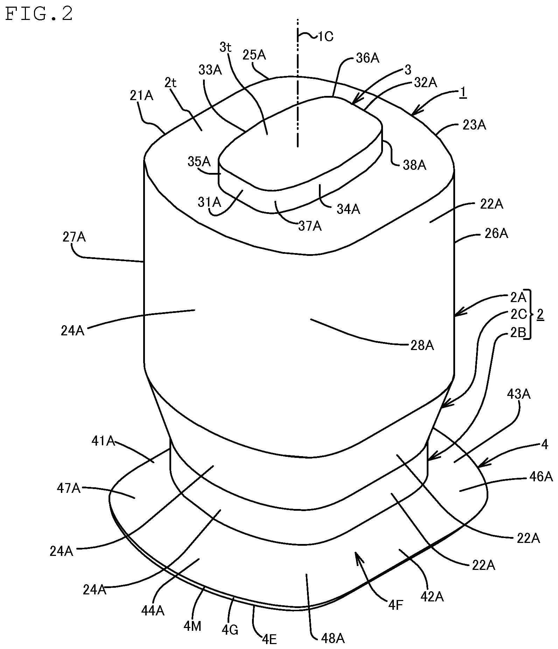

As shown in FIG. 1 and FIG. 2, a stud 1, which is comprised of a body section 2, a pin section 3 disposed on one end of the body section 2 along the central axis of the body section 2, and a flange section 4 disposed on the other end along the central axis of the body section 2, is a columnar member extending along the central axis of the body section 2.

The stud 1 according to the first embodiment is formed with the central axis of the body section 2 in line (continuous straight line) with the central axis of the pin section 3 and the central axis of the flange section 4. And the continuous straight line constitutes the central axis 1C of the stud 1 (hereinafter referred to simply as "central axis 1C").

It is to be noted that the central axis 1C refers to the axis of rotation center of the pin section, the body section, and the flange section of a stud embedded in the direction of tire radius (depth direction), that is, the axis of the median point in the cross section orthogonal to the tire radial direction. In other words, the central axis 1C is the central axis extending in the direction of extension of the stud 1 positioned at the median point in the cross section orthogonal to the direction of extension of the stud 1 embedded in a tire.

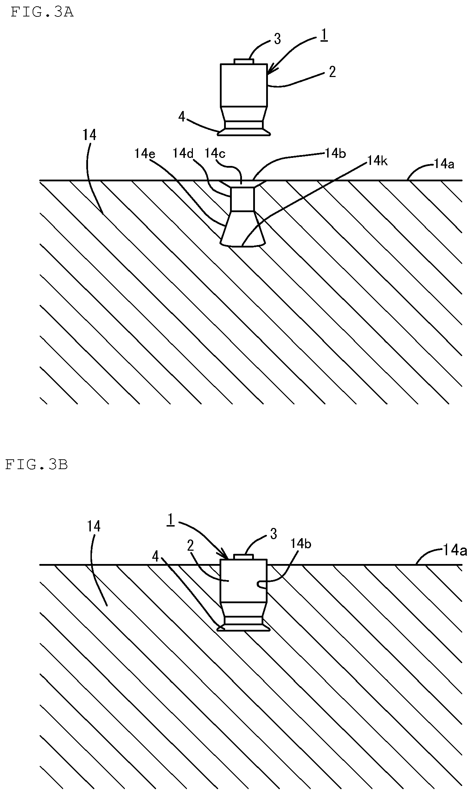

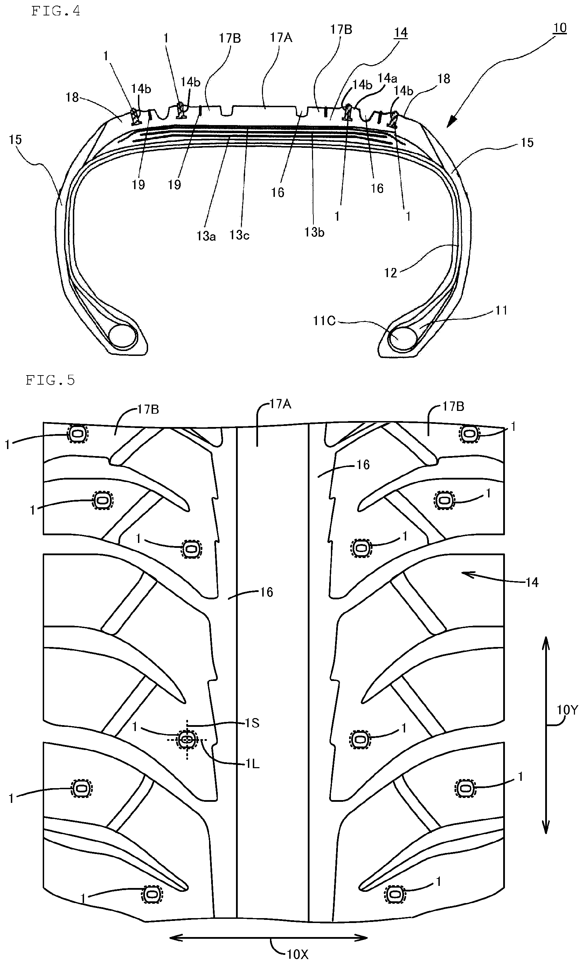

As shown in FIG. 3 and FIG. 4, the stud 1 is embedded in the surface 14a side of the tread 14 of a tire with the flange section 4 first fitted into a stud recess 14b (see FIG. 3) formed in the tread surface 14a. Thus, a studdable tire (studded tire) 10 (see FIG. 4) is formed with the pin section 3, which is one end of the stud 1, protruding from the surface 14a side of the tread 14.

- Body section

As shown in FIG. 1 and FIG. 2, the body section 2 has an upper part 2A located on one end along the central axis 1C, a lower part 2B located on the other end along the central axis 1C, and a middle part 2C connecting the upper part 2A and the lower part 2B.

The upper part 2A is formed in a columnar body in the same shape in cross section orthogonal to the central axis 1C for the whole length along the central axis 1C.

The lower part 2B is formed in a columnar body in the same shape in cross section orthogonal to the central axis 1C for the whole length along the central axis 1C.

The sectional diameter (axis length) of the upper part 2A and the sectional diameter of the lower part 2B are in a relationship of "sectional diameter of the upper part 2A > sectional diameter of the lower part 2B".

The middle part 2C is formed in a cone-shaped columnar body whose sectional diameter orthogonal to the central axis 1C reduces gradually from the upper part 2A side to the lower part 2B side.

The outer periphery of the body section 2 consists of a pair of flat surface portions 21A, 22A opposite each other with the central axis 1C therebetween, a pair of curved surface portions 23A, 24A extending from the ends of the pair of flat surface portions 21A, 22A and outwardly bulging opposite each other with the central axis 1C therebetween, and curved border surface portions 25A, 26A, 27A, 28A, which are border portions between the flat surface portions 21A, 22A and the curved surface portions 23A, 24A outwardly bulging away from the central axis 1C.

That is, the outer periphery of the body section 2 is formed with one end of the curved surface portion 23A, which is one of the pair of curved surface portions 23A, 24A, connected with one end of the flat surface portion 21A, which is one of the pair of flat surface portions 21A, 22A, via the curved border surface portion 25A, the other end of one curved surface portion 23A connected with one end of the other flat surface portion 22A via the curved border surface portion 26A, one end of the other curved surface portion 24A connected with the other end of one flat surface portion 21A via the curved border surface portion 27A, and the other end of the other curved surface portion 24A connected with the other end of the other flat surface portion 22A via the curved border surface portion 28A. The curved border surface portions are each connected with a flat surface portion at one end and with a curved surface portion at the other end.

It is to be noted that the curved surface portions 23A, 24A may each be of a constitution combining a curved surface portion and a flat surface portion.

Also, the outer periphery of the body section 2 refers to the peripheral side surfaces extending in the same direction as the central axis 1C. In other words, the outer periphery of the body section 2 is the surface extending along the central axis 1C and surrounding the central axis.

Also, as shown in FIG. 1A, the body section 2 is the most preferably of a constitution having a pair of straight edge portions 21, 22 defined by peripheral profile lines of the cross section orthogonal to the central axis 1C and the peripheral edges (edges) at one end along the central axis 1C (hereinafter referred to as "end surface 2t") opposite each other with the central axis 1C therebetween, a pair of curved edge portions 23, 24 extending from the ends of the pair of straight edge portions 21, 22 and outwardly bulging opposite each other with the central axis 1C therebetween, and curved border edge portions 25, 26, 27, 28, which are border portions between the straight edge portions 21, 22 and the curved edge portions 23, 24 outwardly bulging away from the central axis 1C. The curved border edge portions are each connected to a straight edge portion at one end and to a curved edge portion at the other end.

It is to be noted that the curved edge portions 23, 24 may each be configured by a combination of a curved edge portion and a straight edge portion.

The end surface 2t of the body section 2 is formed into a flat surface orthogonal to the central axis 1C or a curved surface bulging toward one end thereof along the central axis 1C or a curved surface depressed toward the other end thereof along the central axis 1C, for instance.

The pair of flat surface portions 21A, 22A constituting the outer periphery of the upper part 2A are formed by parallel flat surfaces opposite each other with the central axis 1C therebetween. The pair of curved surface portions 23A, 24A constituting the outer periphery of the upper part 2A are formed by curved surfaces having the same curvature and the same distance to the central axis 1C. The length of the pair of flat surface portions 21A, 22A constituting the outer periphery of the upper part 2A in the plane orthogonal to the central axis 1C (that is, the length of the straight line intersecting the plane orthogonal to the central axis 1C on the pair of flat surface portions 21A, 22A of the upper part 2A (hereinafter referred to as "width length")) is the same as the length of each of the straight edge portions 21, 22. And the length of the pair of curved surface portions 23A, 24A of the upper part 2A in the plane orthogonal to the central axis 1C (that is, the length of the curved line intersecting the plane orthogonal to the central axis 1C on the pair of curved surface portions 23A, 24A of the upper part 2A (hereinafter referred to as "width length")) is the same as the length of each of the curved edge portions 23, 24. In other words, the shape of the peripheral edges (edges) of the end surface 2t of the upper part 2A is congruent to the shape of the peripheral profile lines of the cross section of the upper part 2A orthogonal to the central axis 1C.

The pair of flat surface portions 21A, 22A constituting the outer periphery of the lower part 2B are formed by parallel flat surfaces opposite each other with the central axis 1C therebetween. The pair of curved surface portions 23A, 24A constituting the outer periphery of the lower part 2B are formed by curved surfaces having the same curvature and the same distance to the central axis 1C. The width length of the pair of flat surface portions 21A, 22A of the lower part 2B is the same as the length of each of the straight edge portions 21, 22. And the width length of the pair of curved surface portions 23A, 24A of the lower part 2B is the same as the length of each of the curved edge portions 23, 24.

The pair of flat surface portions 21A, 22A constituting the outer periphery of the middle part 2C are formed by flat surfaces opposite each other with the central axis 1C therebetween with reducing distance between the opposite surfaces from the upper part 2A side to the lower part 2B side. The pair of curved surface portions 23A, 24A constituting the outer periphery of the middle part 2C are formed by curved surfaces having the same curvature and the same distance to the central axis 1C. The width length of the pair of flat surface portions 21A, 22A of the middle part 2C is the same as the length of each of the straight edge portions 21, 22. And the width length of the pair of curved surface portions 23A, 24A of the middle part 2C is the same as the length of each of the curved edge portions 23, 24.

The shape of the peripheral edges of the end surface 2t of the upper part 2A (end surface 2t of the body section 2), the shape of the peripheral profile lines of the cross section orthogonal to the central axis 1C of the upper part 2A, the shape of the peripheral profile lines of the cross section orthogonal to the central axis 1C of the lower part 2A, and the shape of the peripheral profile lines of the cross section orthogonal to the central axis 1C of the middle part 2C are formed into a 180-degree rotational symmetry with the central axis 1C at the center of rotation.

The 180-degree rotational symmetry is a shape formed by the four corners of a square rounded by the curved border edge portions 25, 26, 27, 28 and a pair of curved sides opposite each other of the square.

That is, the shape of the peripheral edges of the end surface 2t of the body section 2 and the shape of the peripheral profile lines of the body section 2 are in a 180-degree rotational symmetry constituted by a pair of straight edge portions 21, 22 opposite each other with the central axis 1C therebetween, a pair of curved edge portions 23, 24 extending from the ends of the pair of straight edge portions 21, 22 and outwardly bulging opposite each other with the central axis 1C therebetween, and the curved border edge portions 25, 26, 27, 28, which are border portions between the straight edge portions 21, 22 and curved edge portions 23, 24 outwardly bulging away from the central axis 1C.

In other words, the sectional shape of the body section 2 orthogonal to the central axis 1C and the shape of the end surface 2t have a long axis 1L and a short axis 1S passing through the central axis 1C and orthogonal to each other in the cross section orthogonal to the central axis 1C. And they are symmetrical with respect to the long axis 1L or the short axis 1S as the axis of symmetry. It is to be noted that the direction along the long axis 1L is hereinafter referred to as the longer direction of the stud 1, and the direction along the short axis 1S as the shorter direction of the stud 1.

And the maximum distance between the curved edge portions 23 and 24 intersecting with the long axis 1L is defined as the major axis dimension, and the distance between the straight edge portions 21 and 22 intersecting with the short axis 1S as the minor axis dimension. In this case, the ellipticity of the sectional shape of the body section 2 defined by the major axis dimension and the minor axis dimension is greater than 0 and equal to or less than 0.2.

$$\texttt{Note that ellipticity = 1 - (b/a)}$$

where a: major axis dimension
b: minor axis dimension

That is, the relationship between the major axis dimension a, which is the maximum distance between the pair of curved surface portions 23A, 24A, and the minor axis dimension b, which is the maximum distance between the pair of flat surface portions 21A, 22A, in the cross section orthogonal to the central axis 1C is a > b.

The flat surface portions 21A, 22A of the upper part 2A, the lower part 2B, and the middle part 2C are flat surface portions extending along the central axis 1C and the above-mentioned long axis 1L.

The curved surface portions 23A, 24A of the upper part 2A, the lower part 2B, and the middle part 2C are curved surface portions extending along the central axis 1C and the above-mentioned short axis 1S.

The length of the arc of the curved surface portions 23A, 24A of the upper part 2A, the lower part 2B, and the middle part 2C (length extending along the short axis 1S) is shorter than 1/2 of the circumference of the circle having the curvature radius of the curved surface portions 23A, 24A, or the half circumference of the circle. In other words, the sectional shape of the body section 2 orthogonal to the central axis 1C and the shape of the end surface 2t are not oval or elliptical.

- Pin section

The pin section 3 is formed into a columnar body having an equal sectional shape orthogonal to the central axis 1C for the whole length along the central axis 1C.

As shown in FIG. 2, the outer periphery of the pin section 3 consists of a pair of flat surface portions 31A, 32A opposite each other with the central axis 1C therebetween, a pair of curved surface portions 33A, 34A extending from the ends of the pair of flat surface portions 31A, 32A and outwardly bulging opposite each other with the central axis 1C therebetween, and curved border surface portions 35A, 36A, 37A, 38A, which are border portions between the flat surface portions 31A, 32A and the curved surface portions 33A, 34A outwardly bulging away from the central axis 1C. The curved border surface portions are each connected to the flat surface portion at one end and to the curved surface portion at the other end.

It is to be noted that the curved surface portions 33A, 34A may each be configured by a combination of a curved surface portion and a flat surface portion.

That is, the outer periphery of the pin section 3 is formed with one end of the curved surface portion 33A, which is one of the pair of curved surface portions 33A, 34A, connected with one end of the flat surface portion 31A, which is one of the pair of flat surface portions 31A, 32A, via the curved border surface portion 35A, the other end of one curved surface portion 33A connected with one end of the other flat surface portion 32A via the curved border surface portion 36A, one end of the other curved surface portion 34A connected with the other end of one flat surface portion 31A via the curved border surface portion 37A, and the other end of the other curved surface portion 34A connected with the other end of the other flat surface portion 32A via the curved border surface portion 38A.

It is to be noted that the outer periphery of the pin section 3 refers to the peripheral side surfaces extending in the same direction as the central axis 1C. In other words, the outer periphery of the pin section 3 is the surfaces extending along the central axis 1C and surrounding the central axis 1C.

Also, as shown in FIG. 1A, the pin section 3 is the most preferably of a constitution having a pair of straight edge portions 31, 32 defined by peripheral profile lines of the cross section orthogonal to the central axis 1C and the peripheral edges (edges) at one end along the central axis 1C (hereinafter referred to as "end surface 3t") opposite each other with the central axis 1C therebetween, a pair of curved edge portions 33, 34 extending from the ends of the pair of straight portions 31, 32 and outwardly bulging opposite each other with the central axis 1C therebetween, and curved border edge portions 35, 36, 37, 38, which are border portions between the straight edge portions 31, 32 and the curved edge portions 33, 34 outwardly bulging away from the central axis 1C. The curved border edge portions are each connected to a straight edge portion at one end and to a curved edge portion at the other end.

It is to be noted that the curved edge portions 33, 34 may each be configured by a combination of a curved edge portion and a straight edge portion.

The end surface 3t of the pin section 3 is formed into a flat surface orthogonal to the central axis 1C or a curved surface bulging toward one end thereof along the central axis 1C or a curved surface depressed toward the other end thereof along the central axis 1C, for instance.

The pair of flat surface portions 31A, 32A constituting the outer periphery of the pin section 3 are formed by parallel flat surfaces opposite each other with the central axis 1C therebetween. The pair of curved surface portions 33A, 34A constituting the outer periphery of the pin section 3 are formed by curved surfaces having the same curvature and the same distance from the central axis 1C. The length of the pair of flat surface portions 31A, 32A of the pin section 3 in the plane orthogonal to the central axis 1C (hereinafter referred to as "width length") is the same as the length of each of the straight edge portions 31, 32. And the length of the pair of curved surface portions 33A, 34A of the pin section 3 in the plane orthogonal to the central axis 1C (hereinafter referred to as "width length") is the same as the length of each of the curved edge portions 33, 34. In other words, the shape of the peripheral edges (edges) of the end surface 3t of the pin section 3 is congruent to the shape of the peripheral profile lines of the cross section of the pin section 3 orthogonal to the central axis 1C.

The shape of the peripheral edges of the end surface 3t of the pin section 3 and the shape of the peripheral profile lines of the cross section orthogonal to the central axis 1C of the pin section 3 are formed into a 180-degree rotational symmetry with the central axis 1C at the center of rotation.

The 180-degree rotational symmetry is a shape formed by the four corners of a square rounded by the curved border edge portions 35, 36, 37, 38 and a pair of curved sides opposite each other of the square. The shape of the 180-degree rotational symmetry is, so to speak, a shape such that the curved surfaces located on both end sides of the major axis of an ellipse are replaced by straight lines orthogonal to the major axis (shape of a rugby ball with straight line portions made by cutting off the both end sides of the major axis in planar view).

That is, the shape of the peripheral edges of the pin section 3 and the shape of the peripheral profile lines thereof are in a 180-degree rotational symmetry constituted by a pair of straight edge portions 31, 32 opposite each other with the central axis 1C therebetween, a pair of curved edge portions 33, 34 extending from the ends of the pair of straight edge portions 31, 32 and outwardly bulging opposite each other with the central axis 1C therebetween, and the curved border edge portions 35, 36, 37, 38, which are border portions between the straight edge portions 31, 32 and curved edge portions 33, 34 outwardly bulging away from the central axis 1C.

Also, the length of the arc of the curved surface portions 33A, 34A of the pin section 3 (length extending along the long axis 1L) is shorter than 1/2 of the circumference of the circle having the curvature radius of the curved surface portions 33A, 34A, or the length of the half circumference of the circle. In other words, the sectional shape of the pin section 3 orthogonal to the central axis 1C and the shape of the end surface 3t are not oval or elliptical.

In other words, the sectional shape of the pin section 3 orthogonal to the central axis 1C has a long axis 1L and a short axis 1S passing through the central axis 1C and orthogonal to each other in the cross section orthogonal to the central axis 1C. And it is symmetrical with respect to the long axis 1L or the short axis 1S as the axis of symmetry.

And the distance between the straight edge portions 31 and 32 intersecting with the long axis 1L is defined as the major axis dimension, and the distance between the curved edge portions 33 and 34 intersecting with the short axis 1S as the minor axis dimension. Then the ellipticity of the sectional shape of the pin section 3 defined by the major axis dimension and the minor axis dimension is 0.3 or more and 0.6 or less.

$$\text{Note that ellipticity} = 1 - (b/a)$$

where a: major axis dimension
b: minor axis dimension

- Vertical sectional shape of the flange section

The flange section 4 is formed such that the diameter (axis length) of the peripheral surface 4F increases from one end to the other end thereof along the central axis 1C. And the maximum peripheral diameter position 4M of the peripheral surface 4F of the flange section 4 is located closer to the other end surface 4E of the flange section 4 than to the 1/2 position in the thickness direction of the flange section along the central axis 1C.

That is, the sectional shape in parallel with the central axis 1C of the flange section 4 is such that the diameter (axis length) of the cross section orthogonal to the central axis 1C increases gradually from the side of the lower part 2B of the body section 2 to the maximum peripheral diameter position 4M of the flange section 4 and decreases gradually from the maximum peripheral diameter position 4M of the flange section 4 toward the other end surface 4E of the flange section 4.

And the maximum peripheral diameter position 4M is formed into a curved surface, and at the same time the border portion between the maximum peripheral diameter position 4M of the peripheral surface 4F and the other end surface 4E of the flange section 4 is formed into a curved surface 4G outwardly bulging away from the central axis 1C.

It is to be noted that the flange section 4 has a curved border portion with the peripheral surface 4F and the other end surface 4E outwardly bulging away from the central axis 1C, and the curved border portion is connected to the peripheral surface 4F at one end and to the other end surface 4E at the other end.

- Flange section

As shown in FIG. 1 and FIG. 2, the outer periphery 4F of the flange section 4 is configured by a pair of straight surface portions 41A, 42A opposite each other with the central axis 1C therebetween, a pair of curved surface portions 43A, 44A extending from one edge in the radial direction (central axis direction) of the pair of straight surface portions 41A, 42A and outwardly bulging opposite each other with the central axis 1C therebetween, and curved border surface portions 45A, 46A, 47A, 48A, which are border portions between the straight surface portions 41A, 42A and the curved surface portions 43A, 44A outwardly bulging away from the central axis 1C. And it is so arranged that the curvature radius of the curved surface portions and the curvature radius of the curved border surface portions are different from each other.

That is, the outer periphery 4F of the flange section 4 is formed with one end of the curved surface portion 43A, which is one of the pair of curved surface portions 43A, 44A, connected with one end of the flat surface portion 41A, which is one of the pair of flat surface portions 41A, 42A, via the curved border surface portion 45A (see FIG. 1A), the other end of one curved surface portion 43A connected with one end of the other flat surface portion 42A via the curved border surface portion 46A, one end of the other curved surface portion 44A connected with the other end of one flat surface portion 41A via the curved border surface portion 47A, and the other end of the other curved surface portion 44A connected with the other end of the other flat surface portion 42A via the curved border surface portion 48A.

It is to be noted that the outer periphery 4F of the flange section 4 refers to the peripheral side surfaces along the central axis 1C. That is, the outer periphery 4F of the flange section 4 is the surfaces extending along the central axis 1C and surrounding the central axis 1C.

In other words, as shown in FIG. 1A, the flange section 4 has a peripheral profile line of the cross section orthogonal to the central axis 1C, configured by a pair of straight portions 41, 42 opposite each other with the central axis 1C therebetween, a pair of curved portions 43, 44 extending from the ends of the pair of straight portions 41, 42 and border portions between the straight portions 41, 42 and the curved portions 43, 44. The border portions are formed of curved border portions 45, 46, 47, 48 outwardly bulging opposite each other with the central axis 1C therebetween, and the radius of curvature of the curved portion is different from the radius of curvature of the curved border portion. The curved border portions are each connected to a straight portion at one end and to a curved portion at the other end.

It is to be noted that the curved portions 43, 44 may each be configured by combining a curved portion and a straight portion.

The other end surface 4E of the flange section 4 is formed into a flat surface orthogonal to the central axis 1C, for instance.

The pair of straight portions 41A, 42A constituting the outer periphery 4F of the flange section 4 are formed by flat surfaces opposite each other with the central axis 1C therebetween with the distance therebetween increasing from the lower part 2B side of the body section 2 toward the maximum peripheral diameter position 4M of the flange section 4. The pair of curved portions 43A, 44A constituting the outer periphery 4F of the flange section 4 are formed by curved surfaces opposite each other with the central axis 1C therebetween and having the same curvature about the central axis 1C, with the distance therebetween increasing from the lower part 2B side of the body section 2 toward the maximum peripheral diameter position 4M of the flange section 4. The length of the pair of straight surface portions 41A, 42A of the flange section 4 in the plane orthogonal to the central axis 1C (hereinafter referred to as "width length") is the same as the length of each of the straight portions 41, 42. And the length of the pair of curved surface portions 43A, 44A of the flange section 4 in the plane orthogonal to the central axis 1C (hereinafter referred to as "width length") is the same as the length of each of the curved portions 43, 44.

In other words, the shape of the peripheral edges (edges) of the other end surface 4E of the flange section 4 is similar to, about the central axis 1C, the shape of the peripheral profile lines of the cross section of the flange section 4 orthogonal to the central axis 1C.

The shape of the peripheral edges of the other end surface 4E of the flange section 4 and the shape of the peripheral profile lines of the cross section orthogonal to the central axis 1C of the flange section 4 are formed into a 180-degree rotational symmetry with the central axis 1C as the center of rotation.

The 180-degree rotational symmetry is a shape formed by the four corners of a square rounded by the curved border portions 45, 46, 47, 48 and a pair of curved sides opposite each other of the square.

That is, the shape of the peripheral edges of the other end surface 4E of the flange section 4 and the shape of the peripheral profile lines are in a 180-degree rotational symmetry constituted by a pair of straight portions 41, 42 opposite each other with the central axis 1C therebetween, a pair of curved portions 43, 44 extending from the ends of the pair of straight portions 41, 42 and outwardly bulging opposite each other with the central axis 1C therebetween, and the curved border portions 45, 46, 47, 48, which are border portions between the straight portions 41, 42 and the curved portions 43, 44 outwardly bulging away from the central axis 1C.

Also, the length of the arc of the curved surface portions 43A, 44A of the flange section 4 (length extending along the short axis 1S) is shorter than 1/2 of the circumference of the circle having the curvature radius of the curved surface portions 43A, 44A, or the length of the half circumference of the circle. That is, the sectional shape of the flange section 4 orthogonal to the central axis 1C and the shape of the other end surface 4E thereof are not oval or elliptical.

In other words, the sectional shape of the flange section 4 orthogonal to the central axis 1C has a long axis 1L and a short axis 1S passing through the central axis 1C and orthogonal to each other in the cross section orthogonal to the central axis 1C. And it is symmetrical with respect to the long axis 1L or the short axis 1S as the axis of symmetry.

And the maximum distance between the curved portions 43 and 44 intersecting with the long axis 1L is defined as the major axis dimension, and the distance between the straight portions 41 and 42 intersecting with the short axis 1S as the minor axis dimension. Then the ellipticity of the sectional shape of the flange section 4 defined by the major axis dimension and the minor axis dimension is 0.1 or more and 0.25 or less.

$$\text{Note that ellipticity} = 1 - (b/a)$$

where a: major axis dimension
b: minor axis dimension

- Relationship between the pin section, body section, and flange section

The stud 1 is formed with the long axis 1L of the pin section 3, the long axis 1L of the body section 2, and the long axis 1L of the flange section 4 aligned with each other and the short axis 1S of the pin section 3, the short axis 1S of the body section 2, and the short axis 1S of the flange section 4 aligned with each other.

That is, the stud 1, in the planar view of FIG. 1A, is formed such that the straight edge portions 31, 32 of the pin section 3 face the curved edge portions 23, 24 of the body section 2 and the curved portions 43, 44 of the flange section 4, and the curved edge portions 33, 34 of the pin section 3 face the straight edge portions 21, 22 of the body section 2 and the straight portions 41, 42 of the flange section 4.

That is, the body section 2 is so structured that the peripheral profile lines of the cross section thereof orthogonal to the central axis 1C are comprised of the straight edge portions 21, 22 as a pair of long sides opposite each other with the central axis 1C therebetween extending in the longer direction orthogonal to the central axis 1C and the curved edge portions 23, 24 as a pair of short sides opposite each other with the central axis 1C therebetween extending in the shorter direction orthogonal to the longer direction.

Also, the flange section 4 is so structured that the peripheral profile lines of the cross section thereof orthogonal to the central axis 1C are comprised of the straight edge portions 41, 42 as a pair of long sides opposite each other with the central axis 1C therebetween extending in the longer direction orthogonal to the central axis 1C and the curved edge portions 43, 44 as a pair of short sides opposite each other with the central axis 1C therebetween extending in the shorter direction orthogonal to the longer direction.

Also, the pin section 3 is most preferably structured such that the peripheral edges of one end surface thereof along the central axis 1C and the peripheral profile lines of the cross section thereof orthogonal to the central axis 1C are comprised of the curved edge portions 33, 34 as a pair of longer sides opposite each other with the central axis 1C therebetween extending in the longer direction orthogonal to the central axis 1C and the straight edge portions 31, 32 as a pair of shorter sides opposite each other with the central axis 1C therebetween extending in the shorter direction orthogonal to the longer direction.

And the stud 1 is formed with the longer direction of the pin section 3, the longer direction of the flange section 4, and the longer direction of the body section 2 aligned with each other and the shorter direction of the pin section 3, the shorter direction of the flange section 4, and the shorter direction of the body section 2 aligned with each other.

It is to be noted that alignment in the longer direction and alignment in the shorter direction as meant herein include not only cases where the long axes 1L or the short axes 1S are in complete alignment with each other, but also cases where the long axes 1L or the short axes 1S are in approximate alignment with each other within about $\pm10$ degrees about the central axis 1C.

- Studdable tire

With reference to FIG. 4, a description is given of a studdable tire 10 with studs 1 fitted in stud recesses 14b formed in the tread 14.

The studdable tire 10 includes bead regions 11, bead cores 11C, a carcass layer 12, belt layers 13a, 13b, a tread 14, side treads 15, and studs 1.

The carcass layer 12 is a framework member of the studdable tire 10 in a toroidal shape astride a pair of bead cores 11C disposed in the bead regions 11. Disposed on the radially outer side of the crown region of the carcass layer 12 are the inner belt layer 13a and the outer belt layer 13b. The belt layers 13a, 13b are each steel cord or cord of organic fiber strand crisscrossed at angles of 20 to 70 degrees with respect to the equatorial direction of the tire. The extension direction of the cords of the belt layer 13a disposed on the radially inner side and the extension direction of the cords of the belt layer 13b disposed on the radially outer side intersect with each other.

The tread 14 is a rubber member (tread rubber) disposed on the radially outer side of the belt layers 13a, 13b. Formed in the surface 14a of the tread 14 are a plurality of main grooves 16 extending in the tire circumferential direction 10Y (see FIG. 5), and a plurality of land portions (blocks) 17A, 17B, 18 are defined by the main grooves 16. The land portion 17A is the middle land portion located in the tire center, the land portions 17B are the outer land portions located on each outer side in the tire axial direction 10X of the middle land portion 17A (see FIG. 5), and the land portions 18 are the shoulder land portions located on each outer side in the tire axial direction 10X of the outer land portions 17B.

Formed in the surfaces of the land portions 17A, 17B, 18 are a plurality of sipes 19.

The side treads 15 are rubber members extending from the end of the tread 14 to the side region of the tire and covering the carcass layer 12.

Provided between the tread 14 and the outer belt layer 13b is a belt protection layer 13c which protects the outer belt layer 13b from getting pierced by the studs 1 due to the collapse of the rubber under them (radially inside rubber). The belt protection layer 13c has cords of organic fiber or the like.

Formed in the surface of the tread 14 are stud recesses 14b and the studs 1 are fitted into the stud recesses 14b. The stud recesses 14b are provided in the shoulder land portions 18 and the outer land portions 17B, for instance.

As shown in FIG. 3A, the stud recess (hole) 14b is formed into a cylindrical bottomed hole extending from the surface 14a of the tread 14 of the studdable tire 10 toward the center of the tire, for instance. The stud recess 14b has, for instance, an entry portion 14c, a bottom portion 14e, and an intermediate portion 14d which connects the entry portion 14c and the bottom portion 14e. The entry portion 14c, the bottom portion 14e, and the intermediate portion 14d are formed coaxial about the central axis of the stud recess 14b. The intermediate portion 14d is a cylindrical hole with a constant diameter. The entry portion 14c is a funnel-shaped hole surrounded by a conical surface (conical surface about the center line of the stud recess 14b) with the diameter increasing from the circular entry side of the intermediate portion 14d toward the surface 14a of the tread 14. The bottom portion 14e is a bottomed hole portion surrounded by a plane forming the bottom surface 14k by being increased from the circular bottom end of the intermediate portion 14d toward the circle center of the tire and then decreased to form the bottom surface 14k.

It is to be noted that to improve the anti-stud-loss performance, the shape of the bottom surface 14k of the bottom portion 14e is preferably a shape corresponding to the shape of the flange section 4 of the stud 1.

As shown in FIG. 3B, the stud 1 is driven into the stud recess 14b with the flange section 4 thereof first by a not-shown driving machine, so that the stud 1 is fitted in the stud recess 14b.

The stud 1 is formed such that the height dimension thereof is greater than the depth dimension of the stud recess 14b. Thus, the studs 1 are fitted in the stud recesses 14b with the one-end side of the pin section 3 and body section 2 protruding from the surface 14a, for instance.

The studs 1 according to the first embodiment are fitted in the stud recesses 14b such that the long axis 1L thereof extends in parallel with the tire axial direction 10X and the short axis 1S thereof in parallel with the tire circumferential direction 10Y.

It is to be noted that the studs 1 may also be fitted in the stud recesses 14b such that the long axis 1L thereof extends in parallel with the tire circumferential direction 10Y and the short axis 1S thereof in parallel with the tire axial direction X.

- Effect of the shape of the body section

With the stud 1 according to the first embodiment, the body section 2 is shaped with a pair of flat surface portions 21A, 22A opposite each other with the central axis 1C therebetween and a pair of curved surface portions 23A, 24A extending from the ends of the pair of flat surface portions 21A, 22A and outwardly bulging opposite each other with the central axis 1C therebetween. As a result, when the stud 1 is fitted in the stud recess 14b, there results a difference between the contact mode between the inside wall surface (rubber surface) of the stud recess 14b and the flat surface portions 21A, 22A and the contact mode between the inside wall surface (rubber surface) of the stud recess 14b and the curved surface portions 23A, 24A. This works to prevent the tumbling deformation of the studs 1, thus improving the anti-stud-loss performance.

Also, the body section 2 is shaped with the curved border surface portions 25A, 26A, 27A, 28A, which are the border portions between the flat surface portions 21A, 22A and the curved surface portions 23A, 24A outwardly bulging away from the central axis 1C. Thus, there are no corners in the peripheral surface of the columnar body section 2, which prevents cracking from occurring in the inside wall surface of the stud recess 14b resulting if any edged corner comes in contact with the inside wall surface of the stud recess 14b. Hence, the tumbling deformation of the studs 1 can be prevented, thus improving the anti-stud-loss performance.

The stud loss tends to occur with the progress of wear in the tread 14 of the tire. It is a phenomenon that often takes place at the sudden starting or acceleration of a vehicle and at the trailing end of the contact patch of the tire rolling on the road surface. Hence, it is more effectively resisted if the area of the trailing-end side outer periphery of the body section 2 is made larger that is in contact with the inside wall surface (rubber surface) of the stud recess 14b the longest before the stud loss.

Also, if the already-mentioned ellipticity is made greater than 0.2, then the length of the flat surface portions 21A, 22A (width length along the long axis 1L) will be too short. This will make the contact force between the flat surface portions 21A, 22A and the inside wall surface of the stud recess 14b smaller than the contact force between the curved surface portions 23A, 24A and the inside wall surface of the stud recess 14b. As a result, there will be increased chances of tumbling deformation of the studs 1 at braking and acceleration start, thus reducing the anti-stud-loss performance.

Also, if the ellipticity of the sectional shape of the body section 2 is made smaller than 0, then the difference (clearance) between the major axis of the pin section 3 and the major axis of the upper part 2A of the body section 2 will be too small. This will reduce protection against damage to the pin section 3 by the thickness of the upper part 2A (approximately the robustness against external inputs other than road contact during ordinary travel of a vehicle) . And consequently there will be more troubles, such as damage to or loss of the pin section 3.

With the stud 1 according to the first embodiment, therefore, the ellipticity defined by the major axis dimension and the minor axis dimension in the sectional shape orthogonal to the central axis 1C of the body section 2 is made larger than 0 and 0.2 or smaller. As a result, when the stud 1 is fitted in the stud recess 14b in such a manner that the longer direction orthogonal to the central axis 1C and intersecting with the pair of curved surface portions 23A, 24A extends in the tire axial direction 10X and the shorter direction orthogonal to the longer direction extends in the tire circumferential direction 10Y, the area of the trailing-end side outer periphery of the body section 2 coming in contact with the inside wall surface of the stud recess 14b will be made large, and at the same time the contact force between the flat surface portions 21A, 22A located at the respective ends in the tire axial direction 10X and the inside wall surfaces of the stud recess 14b will be maintained satisfactory. And this will provide a studdable tire 10 with improved anti-stud-loss performance and improved protection against damage to the pin section 3.

It is to be noted that a studdable tire may also have the studs 1 fitted in the stud recesses formed in the surface of the tread thereof in such a manner that the longer direction of the body section 2 extends in the tire circumferential direction and the shorter direction thereof extends in the tire axial direction.

- Effect of the shape of the pin section

The peripheral edges (edges) of the end surface 3t of the pin section 3 have a pair of curved edge portions 33, 34 extending from the ends of the pair of straight edge portions 31, 32 and outwardly bulging opposite each other with the central axis 1C therebetween. Therefore, the length of the peripheral edges, or the length of the pin edges can be made longer to improve the pin edge performance for scratching the frozen road surface.

The peripheral edges of the end surface 3t of the pin section 3 have a pair of straight edge portions 31, 32 and both end portions of the long axis 1L of the pin section 3 are not curved away from the central axis 1C. That is, the both end portions of the long axis 1L of the pin section 3 are not shaped with a bulge. Thus it is possible to thicken the member thickness along the short axis 1S at the both end portions of the long axis 1L of the pin section 3 and accordingly increase the strength along the short axis 1S of the pin section 3. That is, the member thickness along the straight edge portions 31, 32 can be thickened, and the strength along the straight edge portions 31, 32 of the pin section 3 can be increased.

Accordingly, when the studs 1 are fitted in the stud recesses 14b in such a manner that the long axis 1L of the end surface 3t of the pin section 3 extends in the tire axial direction 10X and the short axis 1S of the end surface 3t of the pin section 3 extends in the tire circumferential direction 10Y as shown in FIG. 5, the length of the pin edges in the dragging direction at braking can be made longer, which may lead to improved braking performance. At the same time, the strength of the pin section 3 can be increased, which will provide a studdable tire 10 capable of reducing damage to the pin section 3, such as broken pin in the initial phase of vehicular travel due to insufficient strength in the fore-aft direction of the pin at braking or acceleration start.

Also, the peripheral edges of the end surface 3t of the pin section 3 has curved border edge portions 35, 36, 37, 38, which are border portions between the straight edge portions 31, 32 and the curved edge portions 33, 34 outwardly bulging away from the central axis 1C. As a result, compared with the case where the border portions are shaped angular, there will be less stress concentration at the border portions, which can reduce wear and damage to the pin section 3.

Also, if the above-mentioned ellipticity of the pin section 3 is smaller than 0.3, the sectional shape is not so different from a circle, with the result that no improvement can be expected in the braking and acceleration performance compared with the pin section having a circular cross section.

Also, if the ellipticity of the pin section 3 is larger than 0.6, the minor axis of the pin section 3 becomes too short in comparison with the major axis thereof, which can cause broken pins in the initial phase of vehicular travel due to insufficient fore-aft strength of the pin section 3 at braking or acceleration start.

With the stud 1 according to the first embodiment, therefore, the ellipticity defined by the major axis dimension a and the minor axis dimension b in shape of the end surface 3t of the pin section 3 and the sectional shape orthogonal to the central axis 1C of the pin section 3 is made 0.3 or larger and 0.6 or smaller. As a result, when the studs 1 are fitted in the stud recesses 14b in such a manner that the longer direction orthogonal to the central axis 1C and intersecting with the pair of straight edge portions 31, 32 extends in the tire axial direction 10X and the shorter direction orthogonal to the longer direction extends in the tire circumferential direction 10Y, the length of the pin edges can be made longer, which may result in improved braking and acceleration performance. At the same time, the strength in the fore-aft direction of the pin at braking or acceleration start can be increased, which will provide a studdable tire 10 capable of reducing damage to the pin section 3, such as broken pin in the initial phase of vehicular travel.

It is to be noted that a studdable tire may also have the studs 1 fitted in the stud recesses formed in the surface of the tread thereof in such a manner that the longer direction of the pin section 3 extends in the tire circumferential direction and the shorter direction thereof extends in the tire axial direction.

- Effect of the shape of the flange section

With the stud 1 according to the first embodiment, the flange section 2, the shape of the peripheral profile lines of the cross section orthogonal to the central axis 1C is formed with a pair of straight portions 41, 42 opposite each other with the central axis 1C therebetween and a pair of curved portions 43, 44 extending from the ends of the pair of straight portions 41, 42 and outwardly bulging opposite each other with the central axis 1C therebetween. As a result, when the stud 1 is fitted in the stud recess 14b, there results a difference between the mode of contact between the inside wall surface (rubber surface) of the stud recess 14b and the straight portions 41, 42 and the mode of contact between the inside wall surface (rubber surface) of the stud recess 14b and the curved portions 43, 44. Hence, the tumbling deformation of the studs 1 at braking or acceleration start can be prevented, which will provide a studdable tire 10 with improved anti-stud-loss performance.

Also, the flange section 4 is formed with curved border portions 45, 46, 47, 48, which are border portions between the straight portions 41, 42 and the curved portions 43, 44 outwardly bulging away from the central axis 1C. Thus, there are no corners in the peripheral surface 4F of the flange section 4, which prevents cracking from occurring in the inside wall surface of the stud recess 14b resulting if any edged corner comes in contact with the inside wall surface of the stud recess 14b. Hence, the tumbling deformation of the studs 1 at braking or acceleration start can be prevented, which will provide a studdable tire 10 with improved anti-stud-loss performance.

Also, if the already-mentioned ellipticity of the flange section 4 is made larger than 0.25, then the width length of the straight portions 41, 42 along the long axis 1L will be too short. This will make the contact force between the straight portions 41, 42 and the inside wall surface of the stud recess 14b relatively small in comparison with the contact force between the curved portions 43, 44 and the inside wall surface of the stud recess 14b. As a result, there will be increased chances of tumbling deformation of the studs 1 at braking or acceleration start, thus reducing the anti-stud-loss performance.

Also, if the ellipticity of the flange section 4 is made smaller than 0.1, then the difference (clearance) between the minor axis of the pin section 3 and the minor axis of the flange section 4 will be too small. As a result, there will be increased chances of tumbling deformation of the studs 1 at braking or acceleration start, thus reducing the anti-stud-loss performance.

With the stud 1 according to the first embodiment, therefore, the ellipticity defined by the major axis dimension a and the minor axis dimension b in the sectional shape orthogonal to the central axis 1C of the flange section 4 is made 0.1 or larger and 0.25 or smaller. As a result, when the studs 1 are fitted in the stud recesses 14b in such a manner that the longer direction orthogonal to the central axis 1C and intersecting with the pair of curved portions 43, 44 extends in the tire axial direction 10X and the shorter direction orthogonal to the longer direction extends in the tire circumferential direction 10Y, the tumbling deformation of the studs 1 at braking or acceleration start can be prevented, which will provide a studdable tire 10 with improved anti-stud-loss performance.

It is to be noted that a studdable tire may also have the studs 1 fitted in the stud recesses formed in the surface of the tread thereof in such a manner that the longer direction of the flange section 4 extends in the tire circumferential direction and the shorter direction thereof extends in the tire axial direction.

- Effect of the vertical sectional shape of the flange section

With the stud 1 according to the first embodiment, the flange section 4 is formed such that the diameter (axis length) of the peripheral surface 4F increases from one end to the other end thereof along the central axis 1C. And the maximum peripheral diameter position 4M of the peripheral surface 4F of the flange section 4 is located closer to the other end surface 4E of the flange section 4 than to the 1/2 position of the thickness dimension of the flange section along the central axis 1C. Hence, when the stud 1 is driven into the stud recess 14b, the maximum peripheral diameter position 4M of the flange section 4 is located at a position closer to the belt layers 13a, 13b of the tire. As a result, there will be increased residual stress which pulls the rubber around the stud 1 fitted in the stud recess 14b inward (toward the stud 1) . And this will work to prevent the stud 1 from falling out, thus improving the anti-stud-loss performance.

It is to be noted that the closer the maximum peripheral diameter position 4M of the flange section 4 is located to the belt layers 13a, 13b of the tire when the stud 1 is driven into the stud recess 14b, the greater the residual stress pulling the rubber around the stud 1 fitted in the stud recess 14b inward (toward the stud 1) will be, which will work to prevent the stud 1 from falling out. Therefore, it is desirable that the maximum peripheral diameter position 4M of the flange section 4 be located at a position as close to the other end surface 4E of the flange section 4 as practicable.

Also, the flange section 4 is formed such that the maximum peripheral diameter position 4M is formed into a curved surface, and at the same time the border portion between the maximum peripheral diameter position 4M of the peripheral surface 4F and the other end surface 4E of the flange section 4 is formed into a curved surface 4G outwardly bulging away from the central axis 1C. Thus, there are no corners on the peripheral surface 4F and the border between the other end surface 4E and the peripheral surface 4F, which prevents cracking from occurring in the inside wall surface of the stud recess 14b resulting if any edged corner comes in contact with the inside wall surface of the stud recess 14b. Hence, the tumbling deformation of the studs 1 at braking or acceleration start can be prevented, thus improving the anti-stud-loss performance.

- Effect of alignment

When a stud 1 falls out of a worn land portion (block) of the tire at sudden starting or sudden acceleration, the stud 1 rolls off the land portion (see the states C and D in FIG. 14) as the end surface 3t side of the pin section 3 and the end surface 2t side of the upper part 2A get caught on the road surface. The major factors determining easiness of the rotation of the stud 1 are the resistance by the flange section 4 and the resistance by the end portion of the upper part 2A. When one of the resistances is large and the other small, the stud 1 is more liable to rotational deformation. And when the two resistances are the same, the stud 1 is less likely to fall out because the translatory deformation becomes dominant over the rotational deformation.

These resistances are considered approximately proportional to the sizes of the diameter (axis length) of the flange section 4 and the diameter (axis length) of the upper part 2A. Thus it is considered that the closer to zero the difference between the diameter of the flange section 4 and the diameter of the upper part 2A is, the better the anti-stud-loss performance will be.

With the stud 1 according to the first embodiment, the longer direction of the pin section 3, the longer direction of the flange section 4, and the longer direction of the body section 2 are aligned with each other, and the shorter direction of the pin section 3, the shorter direction of the flange section 4, and the shorter direction of the body section 2 are aligned with each other. This makes it possible to make the difference between the diameter of the flange section 4 and the diameter of the upper part 2A small, which improves the anti-stud-loss performance.

That is, according to the first embodiment, the body section 2 and the flange section 4 are formed such that the pin section 3 displays adequate edge effects in the necessary directions.

Also, the stud according to the first embodiment is so constituted that the straight edge portions provide edge effects and the curved edge portions provide pin durability and satisfy the weight limit.

And most preferably, a studdable tire 10 has the studs 1 fitted in the stud recesses 14b provided therein such that the longer direction of the pin section 3, the flange section 4, and the body section 2 extends in the tire axial direction 10X and shorter direction of the pin section 3, the flange section 4, and the body section 2 extends in the tire circumferential direction 10Y. Thus the studdable tire 10 can feature improved anti-stud-loss performance.

It is to be noted that the anti-stud-loss performance can be improved by making the difference between the diameter of the flange section 4 and the diameter of the upper part 2A small. Therefore, the shape of the stud is satisfactory if at least the longer direction of the pin section 3 and the longer direction of the flange section 4 are aligned with each other and the shorter direction of the pin section 3 and the shorter direction of the flange section 4 are aligned with each other.

Also, the arrangement may also be such that the studdable tire 10 has the studs 1 fitted in the stud recesses 14b provided therein with the longer direction of the pin section 3, the flange section 4, and the body section 2 extending in the tire circumferential direction 10Y and the shorter direction of the pin section 3, the flange section 4, and the body section 2 extending in the tire axial direction 10X.

Second Embodiment

(Relationship between diameter of the upper part and diameter of the flange part: The smaller the difference, the better)

In the second embodiment, the stud 1 has the upper part 2A and the flange part 4 whose diameter (length) along the short axis 1S thereof is the same or nearly the same, so that the difference between the diameter of the flange part 4 and the diameter of the upper part 2A along the short axis 1S thereof is as small as practicable. And the studdable tire 10 has the studs 1 fitted in the stud recesses 14b provided therein with the short axis 1S thereof extending in the tire circumferential direction 10Y and the long axis 1L thereof extending in the tire axial direction 10X. Thus the studdable tire 10 features improved anti-stud-loss performance.

Third Embodiment

(Sectional transformation of the body section)

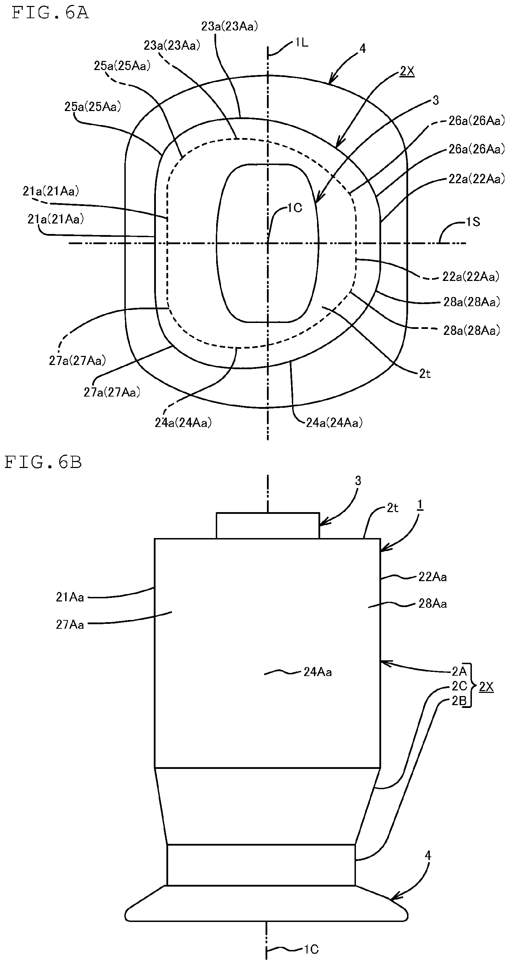

As shown in FIG. 6, the stud 1 (which is not according to the present invention, but which is useful for understanding the present invention) has a body section 2X which has peripheral profile lines of the cross section orthogonal to the central axis 1C such that there is a difference in the length between the pair of straight edge portions constituting the peripheral edges (edges) of the end surface 2t, or in the width length (length along the long axis 1L) of the pair of flat surface portions constituting the peripheral surface.

That is, the stud 1 according to the third embodiment (which is not according to the present invention, but which is useful for understanding the present invention) is a stud 1 having a body section 2X whose peripheral surfaces are comprised of a pair of flat surface portions 21Aa, 22Aa, having different width lengths, opposite each other with the central axis 1C therebetween, a pair of curved surface portions 23Aa, 24Aa extending from the ends of the pair of flat surface portions 21Aa, 22Aa and outwardly bulging opposite each other with the central axis 1C therebetween, and curved border surface portions 25Aa, 26Aa, 27Aa, 28Aa, which are border portions between the flat surface portions 21Aa, 22Aa and the curved surface portions 23Aa, 24Aa outwardly bulging away from the central axis 1C.

Also, the body section 2X has a pair of straight edge portions 21a, 22a, having the peripheral profile lines of the cross section orthogonal to the central axis 1C and the peripheral edges (edges) of the end surface 2t of different lengths, opposite each other with the central axis 1C therebetween, a pair of curved edge portions 23a, 24a extending from the ends of the pair of straight edge portions 21a, 22a and outwardly bulging opposite each other with the central axis 1C therebetween, and curved border edge portions 25a, 26a, 27a, 28a, which are border portions between the straight edge portions 21a, 22a and the curved edge portions 23a, 24a outwardly bulging away from the central axis 1C. Also, the body section 2X is formed such that the peripheral profile lines of the cross section orthogonal to the central axis 1C and the peripheral edges (edges) of the end surface 2t are symmetrical in shape with respect to the short axis 1S.

The stud loss tends to occur with the progress of wear in the tread of the tire. It is a phenomenon that often takes place at the sudden starting or sudden acceleration of a vehicle and at the trailing end of the contact patch of the tire rolling on the road surface. Hence, it is more effectively resisted if the area of the trailing-end side outer periphery of the body section (upper part 2A) is made larger that comes in contact with the inside wall surface (rubber surface) of the stud recess the longest before the stud loss.

Accordingly, the stud 1 according to the third embodiment is fitted in the stud recess 14b in such a manner that the shorter straight edge portion 22a, which is the flat surface portion 22A with a shorter width length, is located on the leading-end side, and the longer straight edge portion 21a, which is the flat surface portion 21A with a longer width length, is located on the trailing-end side. As a result, the tumbling deformation of the studs 1 at braking or acceleration start can be prevented, which will provide a studdable tire 10 with improved anti-stud-loss performance.

It is to be noted here that location of the shorter straight edge portion 22a of the upper part 2A on the leading-end side of the block and location of the longer straight edge portion 21a on the trailing-end side of the block are in consideration of a certain limiting condition on weight per stud. That is, when the studs 1 are fitted in the tire with the shorter straight edge portion 22a of the upper part 2A located on the leading-end side of the block and the longer straight edge portion 21a on the trailing-end side of the block, an improvement in the edge effect, durability, and anti-stud-loss performance can be expected under the limiting condition of the same weight.

It is to be noted that even when the studs 1 are fitted in the tire with the shorter straight edge portion 22a of the upper part 2A located on the trailing-end side of the block and the longer straight edge portion 21a on the leading-end side of the block, there is an improvement in the anti-stud-loss performance when comparing with the shape of the body section which is not dependent on the direction of tire rotation as in FIG. 1 with the volume (weight) thereof fixed. This is because in a stud loss phenomenon (see FIG. 14), there is an improved effect of the body end on the leading-end side, which first falls out of the trailing-end block, getting caught in the stud recess.

Fourth embodiment

(Sectional transformation of the pin section)

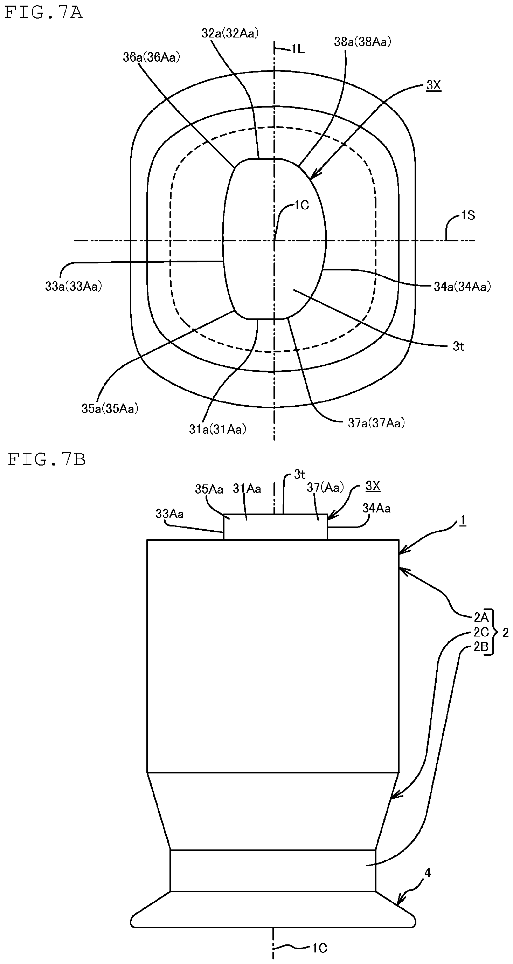

As shown in FIG. 7, the stud 1 may have a pin section 3X which has peripheral profile lines of the cross section orthogonal to the central axis 1C and the pair of curved edge portions constituting the peripheral edges (edges) of the end surface 3t having different curvatures from each other.

That is, the stud 1 according to the fourth embodiment is a stud 1 having a pin section 3X whose peripheral surfaces are comprised of a pair of flat surface portions 31Aa, 32Aa opposite each other with the central axis 1C therebetween, a pair of curved surface portions 33Aa, 34Aa, having different curvatures from each other, extending from the ends of the pair of flat surface portions 31Aa, 32Aa and outwardly bulging opposite each other with the central axis 1C therebetween, and curved border surface portions 35Aa, 36Aa, 37Aa, 38Aa, which are border portions between the flat surface portions 31Aa, 32Aa and the curved surface portions 33Aa, 34Aa outwardly bulging away from the central axis 1C.

Also, the pin section 3X has a pair of straight edge portions 31a, 32a, having the peripheral profile lines of the cross section orthogonal to the central axis 1C and the peripheral edges (edges) of the end surface 3t opposite each other with the central axis 1C therebetween, a pair of curved edge portions 33a, 34a extending from the ends of the pair of straight edge portions 31a, 32a and outwardly bulging opposite each other with the central axis 1C therebetween, and curved border edge portions 35a, 36a, 37a, 38a, which are border portions between the straight edge portions 31a, 32a and the curved edge portions 33a, 34a outwardly bulging away from the central axis 1C.

To improve the anti-stud-loss performance, it is considered effective to reduce the scratch effect of the leading-end side of the pin section that first comes in contact with the road surface at acceleration start. On the other hand, to improve the braking performance, it is considered effective to increase the scratch effect of the trailing-end side of the pin section which becomes the dragging front at the time of braking.

Accordingly, in the fourth embodiment, the studs 1 are fitted in the stud recesses 14b in such a manner that the curved edge portion 34a with a smaller curvature radius of the pin section 3X is located on the leading-end side and the curved edge portion 33a with a larger curvature radius of the pin section 3X is located on the trailing-end side. As a result, the scratch effect of the pin section 3X at the time of tire engagement with the ground is reduced with the curved edge portion 34a with a smaller curvature radius located on the leading-end side of tire rolling. This will improve the anti-stud-loss performance. Furthermore, the scratch effect of the pin section 3X at the time of tire disengagement from the ground is increased with the curved edge portion 33a with a larger curvature radius located on the trailing-end side of tire rolling. This will provide a studdable tire 10 with improved braking performance.

It is to be noted here that location of the curved edge portion 34a with a smaller curvature radius of the pin section 3X on the leading-end side of the block and the curved edge portion 33a with a larger curvature radius of the pin section 3X on the trailing-end side of the block is in consideration of the certain limiting condition on weight per stud. That is, when the studs 1 are fitted in the tire with the curved edge portion 34a with a smaller curvature radius located on the leading-end side of the block and the curved edge portion 33a with a larger curvature radius of the pin section 3X on the trailing-end side of the block, an improvement in the edge effect, durability, and anti-stud-loss performance can be expected under the limiting condition of the same weight.

It is to be noted that even when the studs 1 are fitted in the tire with the curved edge portion 34a with a smaller curvature radius of the pin section 3X located on the trailing-end side of the block and the curved edge portion 33a with a larger curvature radius of the pin section 3X on the leading-end side of the block, there is an improvement in the anti-stud-loss performance when comparing with the shape of the pin section which is not dependent on the direction of tire rotation as in FIG. 1 with the volume (weight) thereof fixed. This is because in a stud loss phenomenon (see FIG. 14), there is an improved effect of the pin end on the leading-end side, which first falls out of the trailing-end block, getting caught in the stud recess.

Fifth Embodiment

(Sectional transformation of the flange section)

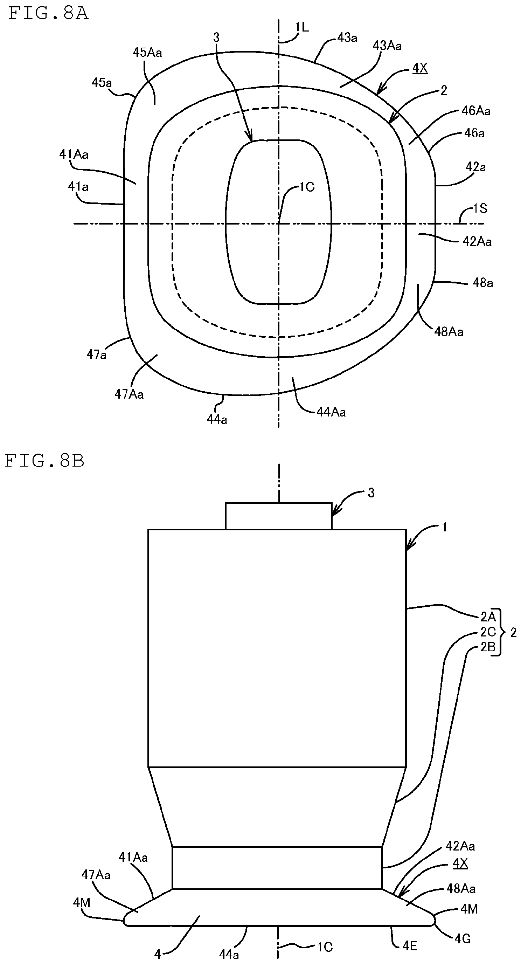

As shown in FIG. 8, the stud 1 may have a flange section 4X which has peripheral profile lines of the cross section orthogonal to the central axis 1C and a pair of straight portions constituting the peripheral edges (edges) of the other end surface 4E having different lengths from each other.

That is, the stud 1 according to the fifth embodiment is a stud 1 having a flange section 4X whose peripheral surfaces are comprised of a pair of straight surface portions 41Aa, 42Aa, having different width lengths from each other, opposite each other with the central axis 1C therebetween, a pair of curved surface portions 43Aa, 44Aa extending from the ends of the pair of straight surface portions 41Aa, 42Aa and outwardly bulging opposite each other with the central axis 1C therebetween, and curved border surface portions 45Aa, 46Aa, 47Aa, 48Aa, which are border portions between the straight surface portions 41Aa, 42Aa and the curved surface portions 43Aa, 44Aa outwardly bulging away from the central axis 1C.

Also, the flange section 4X has a pair of straight portions 21a, 22a, having the peripheral profile lines of the cross section orthogonal to the central axis 1C of different lengths, opposite each other with the central axis 1C therebetween, a pair of curved portions 43a, 44a extending from the ends of the pair of straight portions 41a, 42a and outwardly bulging opposite each other with the central axis 1C therebetween, and curved border portions 45a, 46a, 47a, 48a, which are border portions between the straight portions 41a, 42a and the curved portions 43a, 44a outwardly bulging away from the central axis 1C.

The stud loss tends to occur with the progress of wear in the tread of the tire. It is a phenomenon that often takes place at the sudden starting or sudden acceleration of a vehicle. Hence, it is more effectively resisted if the contact area of the trailing-end side of the flange section is made larger that is in contact the longest before the stud loss.

Accordingly, the studs 1 according to the fifth embodiment are fitted in the stud recesses 14b in such a manner that the shorter straight portion 42a, which is the straight surface portion 42Aa with a shorter width length, is located on the leading-end side, and the longer straight portion 41a, which is the straight surface portion 41Aa with a longer width length, is located on the trailing-end side. As a result, the tumbling deformation of the studs 1 at braking or acceleration start can be prevented, which will provide a studdable tire 10 with improved anti-stud-loss performance.

It is to be noted here that location of the shorter straight portion 42a of the flange section 4 on the leading-end side of the block and the longer straight portion 41a on the trailing-end side of the block is in consideration of the certain limiting condition on weight per stud. That is, when the studs 1 are fitted in the tire with the shorter straight portion 42a of the flange section 4 located on the leading-end side of the block and the longer straight portion 41a on the trailing-end side of the block, an improvement in the edge effect, durability, and anti-stud-loss performance can be expected under the limiting condition of the same weight.

It is to be noted that even when the studs 1 are fitted in the tire with the shorter straight portion 42a of the flange section 4 located on the trailing-end side of the block and the longer straight portion 41a on the leading-end side of the block, there is also an improvement in the anti-stud-loss performance when comparing with the shape of the flange section which is not dependent on the direction of tire rotation as in FIG. 1 with the volume (weight) thereof fixed. This is because in a stud loss phenomenon (see FIG. 14), there is an improved effect of the flange end on the leading-end side, which first falls out of the trailing-end block, getting caught in the stud recess.

Sixth embodiment

(Sectional transformation of the body section, the pin section, and the flange section)

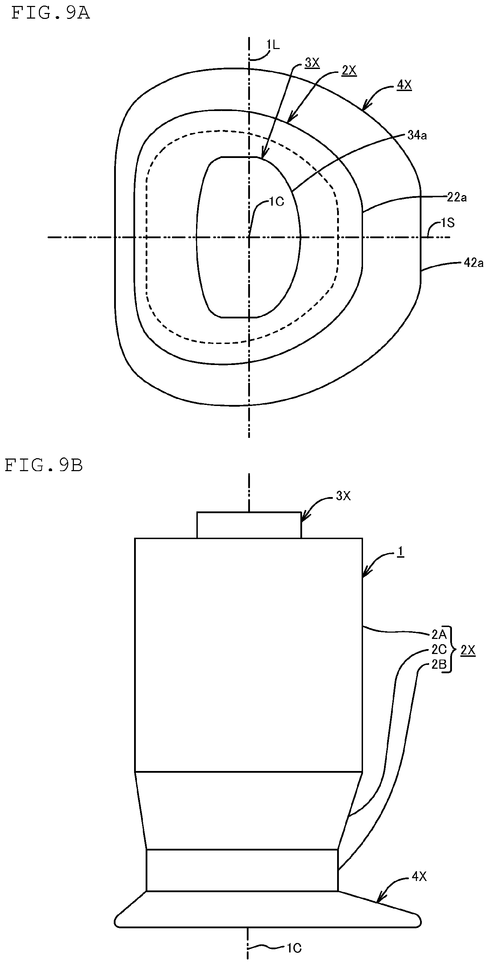

As shown in FIG. 9, the stud 1 (which is not according to the present invention, but which is useful for understanding the present invention) is so configured as to have a body section 2X according to the third embodiment, a pin section 3X according to the fourth embodiment, and a flange section 4X according to the fifth embodiment. And the studs 1 are fitted in the stud recesses 14b with the shorter flat surface portion 22a of the body 2X, the curved surface portion 34a with a smaller curvature radius of the pin section 3X, and the shorter straight surface portion 42a of the flange section 4X located on the leading-end side. This will provide a studdable tire 10 featuring the effects as described in the third to fifth embodiments.

It is to be noted here that location of the shorter flat surface portion 22a of the body 2X, the curved surface portion 34a with a smaller curvature radius of the pin section 3X, and the shorter straight surface portion 42a of the flange section 4X on the leading-end side of the block is in consideration of the certain limiting condition on weight per stud. That is, when the studs 1 are fitted in the tire with the shorter flat surface portion 22a of the body 2X, the curved surface portion 34a with a smaller curvature radius of the pin section 3X, and the shorter straight surface portion 42a of the flange section 4X located on the leading-end side of the block, an improvement in the edge effect, durability, and anti-stud-loss performance can be expected under the limiting condition of the same weight.

It is to be noted that even when the studs 1 are fitted in the tire with the shorter flat surface portion 22a of the body 2X, the curved surface portion 34a with a smaller curvature radius of the pin section 3X, and the shorter straight surface portion 42a of the flange section 4X on the trailing-end side of the block, there is also an improvement in the anti-stud-loss performance when comparing with the shape of the flange section which is not dependent on the direction of tire rotation as in FIG. 1 with the volume (weight) thereof fixed. This is because in a stud loss phenomenon (see FIG. 14), there is an improved effect of the flange end on the leading-end side, which first falls out of the trailing-end block, getting caught in the stud recess.

Seventh Embodiment

(Sectional transformation + staggered central axes of the body section, the pin section, and the flange section)

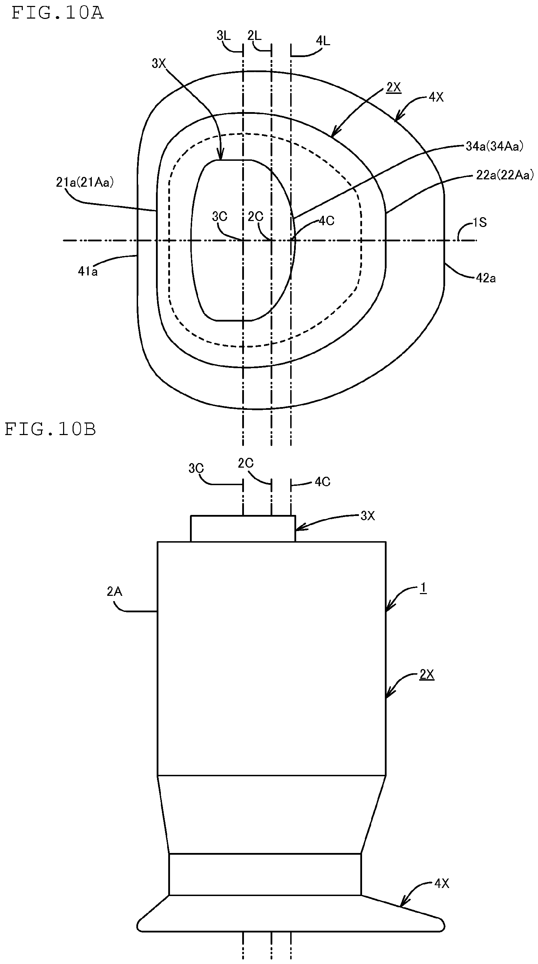

As shown in FIG. 10, the stud 1 (which is not according to the present invention, but which is useful for understanding the present invention) has the central axis 4C of the flange section 4X as described in the sixth embodiment, the central axis 3C of the pin section 3X, and the central axis 2C of the body section 2X staggered from each other. In this case, the stud 1 is so configured that the central axis 3C of the pin section 3X and the central axis 2C of the body section 2X are located on the side closer to the longer straight surface portion 41a of the flange section 4X of the central axis 4C of the flange section 4X. And the studs 1 are fitted in the stud recesses 14b in such a manner that the shorter flat surface 22a of the body section 2X, the curved surface portion 34a with a smaller curvature radius of the pin section 3X, and the shorter straight surface portion 42a of the flange section 4X are located on the leading-end side. As a result, the studdable tire 10 has the studs 1 whose central axis 3C of the pin section 3X and central axis 2C of the body section 2X are offset to the trailing-end side from the central axis 4C of the flange section 4X

According to this studdable tire 10, in the tire circumferential direction the upper part 2A of the body section 2X, the flange section 4X, and the pin section 3X, the trailing-end diameter (axis length) are smaller than the leading-end diameter differences therebetween. This will work to restrict the rotational deformation of the stud 1 on the trailing-end side where the stud 1 is in contact the longest before it falls out, thus improving the anti-stud-loss performance.

As in the above-described sixth embodiment (see FIG. 9) and the seventh embodiment (see FIG. 10), the peripheral profile lines and peripheral edges of the body section have a pair of flat surface portions 21a, 22a of different lengths, the peripheral profile lines and peripheral edges of the pin section have a pair of curved surface portions 33a, 34a of different curvature radii, the peripheral profile lines of the flange section have a pair of straight surface portions 41a, 42a of different lengths, and at the same time the shorter flat surface portion 22a, the curved surface portion 34a of a smaller curvature radius, and the shorter straight surface portion 42a are all located on the same side. And a studdable tire is preferably structured using the studs fitted thereon in such a manner that the shorter flat surface portion 22a of the body section 2X, the curved surface portion 34a of a smaller curvature radius of the pin section 3X, and the shorter straight surface portion 42a of the flange section 4X are located on the leading-end side or the trailing-end side of tire blocks.

The shorter flat surface portion 22a, the curved surface portion 34a of a smaller curvature radius, and the shorter straight surface portion 42a being all located on the same side means that the short axis 1S passes through the middle point of the shorter flat surface portion 22a, the middle point of the curved surface portion 34a of a smaller curvature radius, and the middle point of the shorter straight surface portion 42a and the shorter flat surface portion 22a, the curved surface portion 34a of a smaller curvature radius, and the shorter straight surface portion 42a are located on one side of the long axis 1L.

It is to be noted that the stud may be so structured that the short axis 1S passes through the middle point of the shorter flat surface portion 22a, the middle point of the curved surface portion 34a of a smaller curvature radius, and the middle point of the shorter straight surface portion 42a, and the shorter flat surface portion 22a of the body section and the curved surface portion 34a of a smaller curvature radius of the pin section are located on one side of the long axis 1L and the shorter straight surface portion 42a of the flange section is located on the other side of the long axis 1L. That is, the stud may be so structured that the shorter straight surface portion 42a of the flange section is located on the opposite side of the shorter straight surface portion 22a of the body section 2X and the curved surface portion 34a of a smaller curvature radius of the pin section 3X, with the long axis 1L as the boundary.

Eighth Embodiment

(Side shape of the pin section)

The stud 1 may have a pin section 3Y, instead of the pin section as described in the foregoing embodiments, such that the pin section 3Y has a height dimension at one end in the pin diameter direction orthogonal to the central axis 1C (length dimension along the central axis 1C) different from the height dimension at the other end in the pin diameter direction.

For example, one end and the other end in the pin diameter direction are at the respective end positions on the shortest pin diameter (axis length) line passing through the central axis, that is, the above-described short axis 1S (see FIG. 1).

For example, the pin section 3Y may be so formed that at one of the ends in the diameter direction of the pin section 3Y intersecting with the short axis 1S, the border portion 3s between the end surface 3t of the pin section 3Y and the periphery surface 3r of the pin section 3Y is constituted by a curved border surface portion outwardly bulging away from the central axis 1C.

More specifically, one curved edge portion 33, which is one of the pair of the curved edge portions 33, 34 constituting the peripheral edges (edges) of the end surface 3t of the pin section 3 as described in the first embodiment, may be constituted by the above-mentioned curved border surface portion.

That is, r1 > r2 where r1 is the curvature radius of the border portion 3s between the end surface 3t of the pin section 3Y and the peripheral surface 3r at one of the pair of the curved edge portions 33, 34, and r2 is the curvature radius of the border portion 3e between the end surface 3t of the pin section 3Y and the peripheral surface 3r of the pin section 3Y at the other of the pair of the curved edge portions 33, 34.

Then studdable tires 10 having the studs 1 fitted in the stud recesses 14b therein are fitted on a vehicle in such a manner that the border portion 3s of the curved border surface portions is located on the leading-end side.

According to the eighth embodiment, the curvature radius in the vertical cross section of the border portion 3s between the leading-end end surface (end surface 3t) of the pin section 3Y and the peripheral surface 3r is larger (rounded pin edge). This can reduce the scratch effect of the leading-end side of the pin section 3Y which first comes in contact with the ground at acceleration start, thus improving the anti-stud-loss performance. At the same time, the curvature radius in the vertical cross section of the border portion 3e between the trailing-end end surface 3t of the pin section 3Y and the peripheral surface 3r is smaller (sharp pin edge). This can increase the scratch effect of the trailing-end side of the pin section 3Y which becomes dragging front at the time of braking, thus improving the braking performance.

It is to be noted that the border portion 3s may, for instance, be an oblique plane (bevel) instead of a curved surface. The point is that the stud is allowable if it has a pin section having a height dimension at one end in the pin diameter direction different from the height dimension at the other end in the pin diameter direction. This will work to combine the anti-stud-loss performance and the braking performance, which are otherwise mutually warring performances.

Ninth Embodiment

(Vertical sectional shape of the lower part)

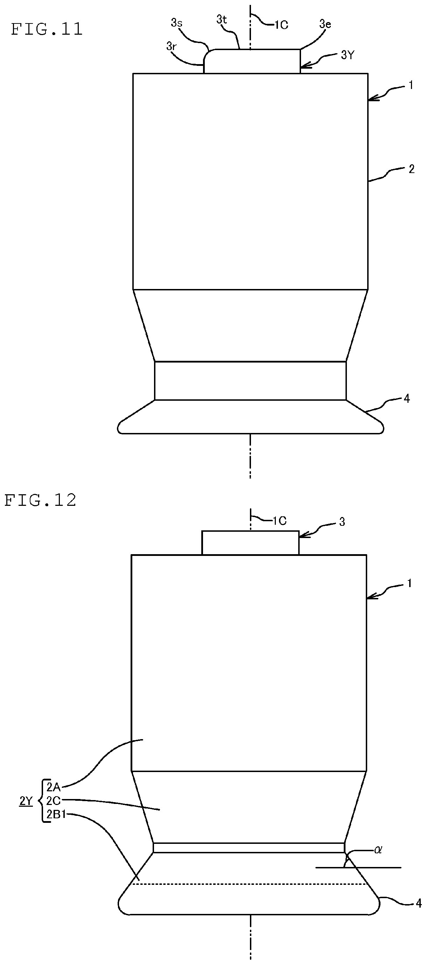

As shown in FIG. 12, the stud 1 may have a body section 2Y having a lower part 2B1 with a cone-shaped outer periphery formed such that the diameter (axis length) in the cross section orthogonal to the central axis 1C gradually increases from the middle part 2C side toward the flange section 4 and the lower part 2B1 connects to the peripheral surface of the flange section 4.

The angle $\alpha$ of the oblique plane (bevel), constituting the peripheral surface of the lower part 2B1 from the cross section orthogonal to the central axis 1C of the lower part 2B1 is preferably 20 deg $\leqq \alpha \leqq$ 60 deg.

When the peripheral surfaces are surfaces in parallel with the central axis 1C as with the lower part 2B already described, the peripheral surfaces do not easily come in contact with the inner peripheral surface of the stud recess 14b, presenting less resistance to the tumbling deformation of the stud 1. However, if the peripheral surfaces are formed in sloping surfaces gradually larger from the middle part 2C to the flange section 4 as those of the lower part 2B1 of the ninth embodiment, then there will be easier contact between the sloping surfaces and the rubber of the inner peripheral surface of the stud recess 14b, presenting greater friction therebetween. This will increase the resistance to the tumbling deformation of the stud 1, thus improving the anti-stud-loss performance.

Tenth Embodiment

The stud may have the end surface of the pin section as described in the foregoing embodiments having grooves as already explained with reference to FIG. 13. The grooves may be cross shaped as shown in FIG. 13 or in a straight line.

These grooves, if provided, are desirable because they can help the removal therethrough of ice powder having been scraped and shaved off by the pin section 3, thus preventing the accumulation of ice powder on one end surface of the pin section 3.

The stud according to one aspect of the present invention is comprised of a columnar body section, a pin section disposed at one end along the central axis of the body section, and a flange section disposed at the other end along the central axis of the body section. And the pin section has a pair of straight edge portions whose peripheral edges at one end surface along the central axis, or the peripheral profile lines of the cross section orthogonal to the central axis, opposite each other with the central axis therebetween, a pair of curved edge portions extending from the ends of the pair of straight edge portions and outwardly bulging away from each other with the central axis therebetween, and curved border edge portions between the straight edge portions and the curved edge portions outwardly bulging away from the central axis. The stud thus provided displays great edge effect and excellent braking and acceleration performance. At the same time, the stud features improved anti-stud-loss performance and high durability of the pin section which has greater strength capable of reducing damage thereto.

Also, other embodiments feature a difference in curvature between one curved edge portion and the other curved edge portion of the pair of curved edge portion. The stud thus provided displays great edge effect and excellent braking and acceleration performance. At the same time, the stud features improved anti-stud-loss performance and high durability of the pin section having greater strength capable of reducing damage thereto.

The studdable tire according to one aspect of the present invention has the studs fitted in the stud recesses in such a manner that the longer direction of the pin section intersecting with the pair of straight edge portions orthogonal to the central axis extends in the tire axial direction and the shorter direction of the pin section orthogonal to the longer direction extends in the tire circumferential direction. The stud thus provided displays great edge effect and excellent braking and acceleration performance. At the same time, the stud features improved anti-stud-loss performance and high durability of the pin section having greater strength capable of reducing damage thereto.

The studdable tire according to another aspect of the present invention has the studs fitted in the stud recesses in such a manner that the longer direction of the pin section intersecting with the pair of straight edge portions orthogonal to the central axis extends in the tire circumferential direction and the shorter direction of the pin section orthogonal to the longer direction extends in the tire axial direction. Thus the stud provided displays great edge effect and excellent braking and acceleration performance. At the same time, the stud features improved anti-stud-loss performance and high durability of the pin section with greater strength capable of reducing damage thereto.

Description of Reference Numerals

| | |
|---|---|
| 1 | stud |
| 1C | central axis |
| 2 | body section |
| 3 | pin section |
| 4 | flange section |
| 10 | studdable tire |
| 14 | tread |
| 14a | tread surface |
| 14b | stud recess (hole) |
| 31, 32 | a pair of straight edge portions |
| 33, 34 | a pair of curved edge portions |

35, 36, 37, 38    curved border edge portions

**Claims**

1.  A stud (1) comprising:

    a body section (2) in a columnar shape;
    a pin section (3) disposed on one end of the body section (2) along the central axis (1C) thereof; and
    a flange section (4) disposed on the other end of the body section (2) along the central axis (1C) thereof,
    wherein the pin section (3) further comprises a pair of straight edge portions (31, 32) defined by peripheral edges of one end surface (3t) along the central axis (1C), or peripheral profile lines in the cross section orthogonal to the central axis (1C), opposite each other with the central axis (1C) therebetween, a pair of curved edge portions (33, 34) extending from the ends of the pair of straight edge portions (31, 32) and outwardly bulging away from each other with the central axis (1C) therebetween, and curved border edge portions (35, 36, 37, 38) between the straight edge portions (31, 32) and the curved edge portions (33, 34) outwardly bulging away from the central axis (1C),
    a sectional shape of the body section (2) orthogonal to the central axis (1C) and a shape of an end surface (2t) of the one end of the body section (2) have a long axis (1L) and a short axis (1S) passing through the central axis (1C) and orthogonal to each other in the cross section orthogonal to the central axis (1C), and the sectional shape of the body section (2) and the shape of the end surface (2t) are symmetrical with respect to the long axis (1L) or the short axis (1S) as an axis of symmetry, and the maximum distance between curved edge portions (23, 24) of the body section (2) intersecting with the long axis (1L) is defined as the major axis dimension, and the distance between straight edge portions (21, 22) of the body section (2) intersecting with the short axis (1S) is defined as the minor axis dimension,
    four corners of a square are rounded by the curved border edge portions (35, 36, 37, 38) and a pair of sides opposite each other of the square are curved sides,
    the ellipticity of the sectional shape of the body section (2) is greater than 0 and equal to or less than 0.2, where the ellipticity = 1 - (b/a), a is the major axis dimension, and b is the minor axis dimension,
    a sectional shape of the pin section (3) orthogonal to the central axis (1C) has a long axis (1L) and a short axis (1S) passing through the central axis (1C) and orthogonal to each other in the cross section orthogonal to the central axis (1C), and the sectional shape of the pin section (3) is symmetrical with respect to the long axis (1L) or the short axis (1S) as an axis of symmetry, and the distance between the straight edge portions (31, 32) intersecting with the long axis (1L) is defined as the major axis dimension, and the distance between the curved edge portions (33, 34) intersecting with the short axis (1S) is defined as the minor axis dimension, and
    the ellipticity of the sectional shape of the pin section (3) is 0.3 or more and 0.6 or less, where the ellipticity = 1 - (b/a), a is the major axis dimension, and b is the minor axis dimension.

2.  The stud (1) according to claim 1, wherein the pair of curved edge portions (33, 34) have different curvatures between one curved edge portion and the other curved edge portion.

3.  A studdable tire having studs (1) according to claim 1 or 2 fitted in stud recesses formed in the tread surface thereof, each stud (1) fitted in such orientation that the longer direction of the pin section (3) orthogonal to the central axis (1C) and intersecting with the pair of straight edge portions (31, 32) thereof extends in the tire axial direction, and the shorter direction of the pin section (3) orthogonal to the longer direction extends in the tire circumferential direction.

4.  A studdable tire having studs (1) according to claim 1 or 2 fitted in stud recesses formed in the tread surface thereof, each stud (1) fitted in such orientation that the longer direction of the pin section (3) orthogonal to the central axis (1C) and intersecting with the pair of straight edge portions (31, 32) thereof extends in the tire circumferential direction, and the shorter direction of the pin section (3) orthogonal to the longer direction extends in the tire axial direction.

5.  The stud (1) according to claim 1, wherein the ellipticity of the sectional shape of the flange section (4) is 0.1 or more and 0.25 or less.

6.  The stud (1) according to claim 1, wherein the stud (1) is formed such that a direction along the long axis (1L) of the pin section (3), a direction along the long axis (1L) of the flange section (4), and a direction along the long axis (1L) of the body section (2) are aligned with each other, and a direction along the short axis (1S) of the pin section (3), a direction along the short axis (1S) of the flange section (4), and direction along the short axis (1S) of the body section (2) are aligned with each other.

7. A studdable tire having studs (1) according to claim 1 fitted in stud recesses (14b) formed in the tread surface (14a) thereof, wherein, in each stud recess (14b), an entry portion (14c) is a funnel-shaped hole surrounded by a conical surface with a diameter increasing from a circular entry side of an intermediate portion (14d) toward the tread surface (14a).

8. A studdable tire having studs (1) according to claim 1 fitted in stud recesses (14b) formed in the tread surface (14a) thereof, wherein, in each stud recess (14b), a bottom portion (14e) is a bottomed hole portion surrounded by a plane forming a bottom surface (14k) by being increased from a circular bottom end of an intermediate portion (14d) of the stud recess (14b) toward the circle center of the tire and then decreased to form the bottom surface (14k).

9. A studdable tire having studs (1) according to claim 1 fitted in stud recesses (14b) formed in the tread surface (14a) thereof, wherein, in each stud recess (14b), the stud (1) is formed such that the height dimension thereof is greater than the depth dimension of the stud recess (14b).

10. A studdable tire having studs (1) according to claim 1 fitted in stud recesses (14b) formed in the tread surface (14a) thereof, wherein, in each stud recess (14b), the stud (1) is fitted in the stud recess (14b) such that the long axis (1L) thereof extends in parallel with the tire axial direction (10X) and the short axis (1S) thereof extends in parallel with the tire circumferential direction (10Y).

## Patentansprüche

1. Spike (1), der Folgendes umfasst:

   eine Körpersektion (2) in einer säulenförmigen Gestalt,
   eine Stiftsektion (3), die an dem einen Ende der Körpersektion (2) entlang der Mittelachse (1C) derselben angeordnet ist, und
   eine Flanschsektion (4), die an dem anderen Ende der Körpersektion (2) entlang der Mittelachse (1C) derselben angeordnet ist,
   wobei die Stiftsektion (3) ferner ein Paar von geraden Kantenabschnitten (31, 32), die durch umlaufende Kanten einer Stirnfläche (3t) entlang der Mittelachse (1C) oder umlaufende Profillinien in dem Querschnitt, senkrecht zu der Mittelachse (1C), einander gegenüberliegend mit der Mittelachse (1C) zwischen denselben, definiert werden, ein Paar von gekrümmten Kantenabschnitten (33, 34), die sich von den Endes des Paares von geraden Kantenabschnitten (31, 32) aus erstrecken und sich nach außen voneinander weg wölben, mit der Mittelachse (1C) zwischen denselben, und gekrümmte Eckkantenabschnitte (35, 36, 37, 38) zwischen den geraden Kantenabschnitten (31, 32) und den gekrümmten Kantenabschnitten (33, 34), die sich von der Mittelachse (1C) weg nach außen wölben, umfasst,
   eine Schnittform der Körpersektion (2), senkrecht zu der Mittelachse (1C), und eine Form einer Stirnfläche (2t) des einen Endes der Körpersektion (2) eine lange Achse (1L) und eine kurze Achse (1S), die durch die Mittelachse (1C) und senkrecht zueinander in dem Querschnitt, senkrecht zu der Mittelachse (1C), verlaufen, aufweisen und die Schnittform der Körpersektion (2) und die Form der Stirnfläche (2t) symmetrisch in Bezug auf die lange Achse (1L) oder die kurze Achse (1S) als eine Symmetrieachse sind und der maximale Abstand zwischen gekrümmten Kantenabschnitten (23, 24) der Körpersektion (2), die sich mit der langen Achse (1L) überschneiden, als die Hauptachsenabmessung definiert wird und der Abstand zwischen geraden Kantenabschnitten (21, 22) der Körpersektion (2), die sich mit der kurzen Achse (1S) überschneiden, als die Nebenachsenabmessung definiert wird,
   vier Ecken eines Quadrats durch die gekrümmten Eckkantenabschnitte (35, 36, 37, 38) abgerundet sind und ein Paar von einander gegenüberliegenden Seiten des Quadrats gekrümmte Seiten sind,
   die Elliptizität der Schnittform der Körpersektion (2) größer als 0 und gleich oder kleiner als 0,2 ist, wobei die Elliptizität = 1 - (b/a) ist, a die Hauptachsenabmessung ist und b die Nebenachsenabmessung ist,
   eine Schnittform der Stiftsektion (3), senkrecht zu der Mittelachse (1C), eine lange Achse (1L) und eine kurze Achse (1S), die durch die Mittelachse (1C) und senkrecht zueinander in dem Querschnitt, senkrecht zu der Mittelachse (1C), verlaufen, aufweist und die Schnittform der Stiftsektion (3) symmetrisch in Bezug auf die lange Achse (1L) oder die kurze Achse (1S) als eine Symmetrieachse ist und der Abstand zwischen den geraden Kantenabschnitten (31, 32), die sich mit der langen Achse (1L) überschneiden, als die Hauptachsenabmessung definiert wird, und der Abstand zwischen den gekrümmten Kantenabschnitten (33, 34), die sich mit der kurzen Achse (1S) überschneiden, als die Nebenachsenabmessung definiert wird, und

die Elliptizität der Schnittform der Stiftsektion (3) 0,3 oder mehr und 0,6 oder weniger beträgt, wobei die Elliptizität = 1 - (b/a) ist, a die Hauptachsenabmessung ist und b die Nebenachsenabmessung ist.

2. Spike (1) nach Anspruch 1, wobei das Paar von gekrümmten Kantenabschnitten (33, 34) unterschiedliche Krümmungen zwischen dem einen gekrümmten Kantenabschnitt und dem anderen gekrümmten Kantenabschnitt aufweist.

3. Bespikebarer Reifen, der Spikes (1) nach Anspruch 1 oder 2 aufweist, die in Spikeaussparungen eingepasst sind, die in der Lauffläche desselben geformt sind, wobei jeder Spike (1) in einer solchen Ausrichtung eingepasst ist, dass sich die längere Richtung der Stiftsektion (3), senkrecht zu der Mittelachse (1C) und die sich mit dem Paar von geraden Kantenabschnitten (31, 32) derselben überschneidet, in der Reifenaxialrichtung erstreckt und sich die kürzere Richtung der Stiftsektion (3), senkrecht zu der längeren Richtung, in der Reifenumfangsrichtung erstreckt.

4. Bespikebarer Reifen, der Spikes (1) nach Anspruch 1 oder 2 aufweist, die in Spikeaussparungen eingepasst sind, die in der Lauffläche desselben geformt sind, wobei jeder Spike (1) in einer solchen Ausrichtung eingepasst ist, dass sich die längere Richtung der Stiftsektion (3), senkrecht zu der Mittelachse (1C) und die sich mit dem Paar von geraden Kantenabschnitten (31, 32) derselben überschneidet, in der Reifenumfangsrichtung erstreckt und sich die kürzere Richtung der Stiftsektion (3), senkrecht zu der längeren Richtung, in der Reifenaxialrichtung erstreckt.

5. Spike (1) nach Anspruch 1, wobei die Elliptizität der Schnittform der Flanschsektion (4) 0,1 oder mehr und 0,25 oder weniger beträgt.

6. Spike (1) nach Anspruch 1, wobei der Spike (1) derart geformt ist, dass eine Richtung entlang der langen Achse (1L) der Stiftsektion (3), eine Richtung entlang der langen Achse (1L) der Flanschsektion (4) und eine Richtung entlang der langen Achse (1L) der Körpersektion (2) miteinander ausgerichtet sind und eine Richtung entlang der kurzen Achse (1S) der Stiftsektion (3), eine Richtung entlang der kurzen Achse (1S) der Flanschsektion (4) und eine Richtung entlang der kurzen Achse (1S) der Körpersektion (2) miteinander ausgerichtet sind.

7. Bespikebarer Reifen, der Spikes (1) nach Anspruch 1 aufweist, die in Spikeaussparungen (14b) eingepasst sind, die in der Lauffläche (14a) desselben geformt sind, wobei, in jeder Spikeaussparung (14b), ein Eintrittsabschnitt (14c) ein trichterförmiges Loch ist, das von einer konischen Oberfläche mit einem Durchmesser umgeben ist, der von einer kreisförmigen Eintrittseite eines Zwischenabschnitts (14d) zu der Lauffläche (14a) hin zunimmt.

8. Bespikebarer Reifen, der Spikes (1) nach Anspruch 1 aufweist, die in Spikeaussparungen (14b) eingepasst sind, die in der Lauffläche (14a) desselben geformt sind, wobei, in jeder Spikeaussparung (14b), ein Sohlenabschnitt (14e) ein mit Sohle versehener Lochabschnitt ist, der von einer Ebene umgeben ist, die dadurch eine Sohlenfläche (14k) bildet, dass sie von einem kreisförmigen Sohlenende eines Zwischenabschnitts (14d) der Spikeaussparung (14b) zu dem Kreismittepunkt des Reifens gesteigert und danach vermindert wird, um die Sohlenfläche (14k) zu bilden.

9. Bespikebarer Reifen, der Spikes (1) nach Anspruch 1 aufweist, die in Spikeaussparungen (14b) eingepasst sind, die in der Lauffläche (14a) desselben geformt sind, wobei, in jeder Spikeaussparung (14b), der Spike (1) derart geformt ist, dass die Höhenabmessung desselben größer ist als die Tiefenabmessung der Spikeaussparung (14b).

10. Bespikebarer Reifen, der Spikes (1) nach Anspruch 1 aufweist, die in Spikeaussparungen (14b) eingepasst sind, die in der Lauffläche (14a) desselben geformt sind, wobei, in jeder Spikeaussparung (14b), der Spike (1) derart in der Spikeaussparung (14b) eingepasst ist, dass sich die lange Achse (1L) desselben parallel mit der Reifenaxialrichtung (10X) erstreckt und sich die kurze Achse (1S) desselben parallel mit der Reifenumfangsrichtung (10Y) erstreckt.

**Revendications**

1. Crampon (1) comprenant :

une section de corps (2) en forme de colonne ;

une section de broche (3) disposée à une extrémité de la section de corps (2) le long de l'axe central (1C) correspondant ; et

une section de bride (4) disposée de l'autre côté de la section de corps (2) le long de l'axe central (1C) correspondant,

dans lequel la section de broche (3) comprend en outre une paire de parties de bord droites (31, 32) définies par des bords périphériques d'une surface d'extrémité (3t) le long de l'axe central (1C), ou des lignes de profil périphériques dans la section transversale perpendiculaire à l'axe central (1C), à l'opposé l'une de l'autre avec l'axe central (1C) entre elles, une paire de parties de bord incurvées (33, 34) s'étendant depuis les extrémités de la paire de parties de bord droits (31, 32) et s'éloignant l'une de l'autre vers l'extérieur avec l'axe central (1C) entre elles, et des parties de bord incurvées (35, 36, 37, 38) entre les parties de bord droites (31, 32) et les parties de bord incurvées (33, 34) s'éloignant vers l'extérieur depuis l'axe central (1C), une forme en coupe de la section de corps (2) perpendiculaire à l'axe central (1C) et une forme d'une surface d'extrémité (2t) de l'une extrémité de la section de corps (2) présentent un axe long (1L) et un axe court (1S) passant à travers l'axe central (1C) et perpendiculaires l'un par rapport à l'autre dans la section transversale perpendiculaire à l'axe central (1C), et la forme en coupe de la section de corps (2) et la forme de la surface d'extrémité (2t) sont symétriques relativement à l'axe long (1L) ou à l'axe court (1S) comme axe de symétrie, et la distance maximale entre des parties de bord incurvées (23, 24) de la section de corps (2) coupant l'axe long (1L) est définie comme la dimension de l'axe majeur, et la distance entre des parties de bord droites (21, 22) de la section de corps (2) coupant l'axe court (1S) est définie comme la dimension d'axe mineur, quatre angles d'un carré sont arrondis par les parties de bord incurvées (35, 36, 37, 38) et une paire de côtés opposés l'un à l'autre du carré sont des côtés incurvés, l'ellipticité de la forme en coupe de la section de corps (2) est supérieure à 0 et égale ou inférieure à 0,2, où l'ellipticité = 1 - (b/a), a est la dimension de l'axe majeur, et b est la dimension de l'axe mineur, une forme en coupe de la section de broche (3) perpendiculaire à l'axe central (1C) présente un axe long (1L) et un axe court (1S) passant à travers l'axe central (1C) et perpendiculaires l'un à l'autre dans la section transversale, perpendiculaire à l'axe central (1C), et la forme en coupe de la section de broche (3) est symétrique relativement à l'axe long (1L) ou à l'axe court (1S) comme un axe de symétrie, et la distance entre les parties de bord droites (31, 32) coupant l'axe long (1L) est définie comme la dimension d'axe majeur, et la distance entre les parties de bord incurvées (33, 34) coupant l'axe court (1S) est définie comme la dimension d'axe mineure, et l'ellipticité de la forme en coupe de la section de broche (3) est de 0,3 ou plus et de 0,6 ou moins, où l'ellipticité = 1 - (b/a), a est la dimension d'axe majeur, et b est la dimension d'axe mineur.

2. Crampon (1) selon la revendication 1, dans lequel la paire de parties de bord incurvées (33, 34) présente différentes courbures entre une partie de bord incurvée et l'autre partie de bord incurvée.

3. Pneu en mesure d'être cramponné, présentant des crampons (1) selon la revendication 1 ou 2, installés dans des cavités de crampons formées dans la surface de bande de roulement correspondante, chaque crampon (1) étant installé dans une orientation telle que la direction plus longue de la section de broche (3) perpendiculaire à l'axe central (1C) et coupant la paire de parties de bord droites (31, 32) correspondante s'étend dans la direction axiale du pneu, et la direction plus courte de la section de broche (3) perpendiculaire à la direction plus longue s'étend dans la direction circonférentielle du pneu.

4. Pneu en mesure d'être cramponné, présentant des crampons (1) selon la revendication 1 ou 2 installés dans des cavités de crampon formées dans la surface de bande de roulement correspondante, chaque crampon (1) étant installé dans une orientation telle que la direction plus longue de la section de broche (3) perpendiculaire à l'axe central (1C) et coupant la paire de parties de bord droit (31, 32) correspondante s'étend dans la direction circonférentielle du pneu, et la direction plus courte de la section de broche (3) perpendiculaire à la direction plus longue s'étend dans la direction axiale du pneu.

5. Crampon (1) selon la revendication 1, dans lequel l'ellipticité de la forme en coupe de la section de bride (4) est de 0,1 ou plus et de 0,25 ou moins.

6. Crampon (1) selon la revendication 1, dans lequel le crampon (1) est formé de sorte qu'une direction le long de l'axe long (1L) de la section de broche (3), une direction le long de l'axe long (1L) de la section de bride (4) et une direction le long de l'axe long (1L) de la section de corps (2) sont alignées l'une avec l'autre, et une direction le long de l'axe court (1S) de la section de bride (4) et une direction le long de l'axe court (1S) de la section de corps (2) sont alignées l'une avec l'autre.

**7.** Pneu en mesure d'être cramponné présentant des crampons (1) selon la revendication 1, installés dans des cavités de crampon (14b) formées dans la surface de bande de roulement (14a) correspondante, dans lequel dans chaque cavité de crampon (14b), une partie d'entrée (14c) est un trou en forme d'entonnoir entouré d'une surface conique avec un diamètre qui augmente depuis un côté d'entrée circulaire d'une partie intermédiaire (14d) vers la surface de bande de roulement (14a).

**8.** Pneu en mesure d'être cramponné présentant des crampons (1) selon la revendication 1, installés dans des cavités de crampon (14b) formées dans la surface de bande de roulement (14a) correspondante, dans lequel dans chaque cavité de crampon (14b), une partie inférieure (14e) est une partie de trou en fond entourée d'un plan formant une surface inférieure (14k) augmentée d'une extrémité inférieure circulaire d'une partie intermédiaire (14d) de la cavité de crampon (14b) vers le centre circulaire du pneu puis diminuée afin de former la surface inférieure (14k).

**9.** Pneu en mesure d'être cramponné présentant des crampons (1) selon la revendication 1, installés dans des cavités de crampon (14b) formées dans la surface de bande de roulement (14a) correspondante, dans lequel, dans chaque cavité de crampon (14b), le crampon (1) est formé de sorte que la dimension en hauteur correspondante soit supérieure à la dimension en profondeur de la cavité de crampon (14b).

**10.** Pneu en mesure d'être cramponné présentant des crampons (1) selon la revendication 1, installés dans des cavités de crampon (14b) formées dans la surface de bande de roulement (14a) correspondante, dans lequel, dans chaque cavité de crampon (14b), le crampon (1) est installé dans la cavité de crampon (14b) de sorte que l'axe long (1L) correspondant s'étende de manière parallèle à la direction axiale de pneu (10X) et l'axe court (1S) correspondant s'étende de manière parallèle à la direction circonférentielle du pneu (10Y).

FIG.1A

FIG.1B

FIG.2

FIG.3A

FIG.3B

FIG.4

FIG.5

FIG.6A

23a(23Aa)
23a(23Aa)
25a(25Aa)
25a(25Aa)
1L
4
2X
3
26a(26Aa)
26a(26Aa)
22a(22Aa)
21a(21Aa)
21a(21Aa)
1C
1S
22a(22Aa)
28a(28Aa)
28a(28Aa)
27a(27Aa)
2t
27a(27Aa)
24a(24Aa)
24a(24Aa)

FIG.6B

3
2t
1
21Aa
22Aa
27Aa
28Aa
24Aa
2A
2C
2B
2X
4
1C

FIG.7A

FIG.7B

FIG.8A

FIG.8B

FIG.9A

FIG.9B

FIG.10A

3L  2L  4L

3X

2X  4X

34a(34Aa)

21a(21Aa)

22a(22Aa)

3C  2C  4C

1S

41a

42a

FIG.10B

3C  2C  4C

3X

2A

1

2X

4X

FIG.11

FIG.12

FIG.13A

FIG.13B

FIG.14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2540527 A
- WO 2014148262 A
- JP 4088055 B